(19) Europäisches Patentamt
European Patent Office
Office européen des brevets

(11) EP 4 488 326 A1

# (12) EUROPEAN PATENT APPLICATION
published in accordance with Art. 153(4) EPC

(43) Date of publication:
**08.01.2025 Bulletin 2025/02**

(21) Application number: **23778838.5**

(22) Date of filing: **02.02.2023**

(51) International Patent Classification (IPC):
***C08L 11/00** (2006.01)* ***C08F 2/44** (2006.01)*
***C08F 279/02** (2006.01)*

(52) Cooperative Patent Classification (CPC):
**C08F 2/44; C08F 279/02; C08L 11/00**

(86) International application number:
**PCT/JP2023/003355**

(87) International publication number:
**WO 2023/188802 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022059370**

(71) Applicant: **Denka Company Limited**
**Tokyo 103-8338 (JP)**

(72) Inventors:
- **KUMAGAI, Yushi**
**Tokyo 103-8338 (JP)**
- **UENO, Yumemi**
**Tokyo 103-8338 (JP)**

(74) Representative: **Gulde & Partner**
**Patent- und Rechtsanwaltskanzlei mbB**
**Berliner Freiheit 2**
**10785 Berlin (DE)**

## (54) CHLOROPRENE-BASED POLYMER COMPOSITION, CHLOROPRENE-BASED POLYMER LATEX, AND DIP-MOLDED ARTICLE

(57) The present invention aims to provide a chloroprene-based polymer composition, capable of obtaining a dip-molded article having an excellent tensile strength at break and flexibility after long-term storage. According to the present invention, provided is a chloroprene-based polymer composition containing a chloroprene-based polymer, in which: a peak of a weight average molecular weight of 5,000 to 80,000 is detected when a gel permeation chromatography measurement is performed on a tetrahydrofuran soluble component of the chloroprene-based polymer composition; a toluene swelling degree of a dip-molded article for testing of the chloroprene-based polymer composition is 12.0 or less; the dip-molded article for testing is obtained by molding a composition for forming a dip-molded body for testing by an immersion coagulation method and heat-drying at 140°C for 60 minutes; the composition for forming a dip-molded body for testing contains 2 parts by mass of zinc oxide, 2 parts by mass of a butylated reaction product of p-cresol and dicyclopentadiene, 1.0 part by mass of 2-mercaptobenzimidazole, and 0.1 part by mass of sodium salt of β-naphthalenesulfonic acid formalin condensate, with respect to 100 parts by mass of a solid component of the chloroprene-based polymer composition; the composition for forming a dip-molded body for testing further contains water whose amount is adjusted so that a solid component concentration of the composition for forming a dip-molded body for testing becomes 30 mass%; and the toluene swelling degree is represented by Formula (1) (Formula (1): Toluene swelling degree = 1+(W2/W1-1) (P1/P2) (1/r)), in which W1 represents a mass of the dip-molded article for testing before immersed in toluene, W2 represents a mass of the dip-molded article after immersed in toluene, P1 represents a specific gravity of a rubber component of the chloroprene-based polymer composition, P2 represents a specific gravity of toluene, and r represents a mass fraction of the rubber component of the chloroprene-based polymer composition in the dip-molded article for testing.



Processed by Luminess, 75001 PARIS (FR)

## Description

### Technical Field

The present invention relates to a chloroprene-based polymer composition, a chloroprene-based polymer latex, and a dip-molded article.

### Background Art

Chloroprene-based polymers are known as a material for dip-molded products using a dip-molded article such as medical surgical gloves, medical examination gloves, industrial gloves, balloons, catheters, and rubber boots.

Various techniques have been proposed for chloroprene-based polymer latexes and chloroprene-based polymer dip-molded articles for dip-molded product applications. Regarding dip-molded product applications, Patent Literature 1 describes a polychloroprene latex with a pH of 7 to 14, which contains 100 parts by mass of modified polychloroprene obtained by copolymerizing chloroprene and methacrylic acid, 90 to 150 parts by mass of water, 1 to 5 parts by mass of emulsifier, and 0.5 to 2.5 parts by mass of potassium ion. Regarding dip-molded product applications, Patent Literature 2 describes a mercaptan modified polychloroprene latex, in which chloroprene and 2,3-dichloro-1,3-butadiene are copolymerized, and in the 13C-solid NMR spectrum of polychloroprene, a peak area (A) at 126.2 to 127.6 ppm, a peak area (B) at 122.0 to 126.2 ppm, and a peak area (C) at 129.9 to 130.3 ppm are within the range shown by the following general formula (I). Regarding dip-molded product applications, Patent Literature 3 describes a chloroprene polymer latex that can achieve both excellent flexibility and mechanical properties in a vulcanized rubber produced by dip-molding by containing a high molecular weight substance and a low molecular weight substance. Patent Literature 4 describes a chloroprene-based polymer latex that exhibits excellent flexibility and mechanical properties even under mild vulcanization conditions by copolymerizing isoprene monomer, which is a raw material of isoprene rubber, and chloroprene monomer. Patent Literature 5 describes an isoprene/chloroprene-based polymer dip-molded article that exhibits excellent flexibility without containing a diphenylguanidine-based reagent as a vulcanization accelerator by mixing an isoprene-based polymer latex with a chloroprene-based polymer latex. Patent Literature 6 describes a dip-molded article that exhibits excellent mechanical properties by mixing a nitrile-butadiene-based polymer (NBR) latex or an isoprene-based polymer latex with a chloroprene-based polymer latex as a base.

[Math. 1]

$$\frac{4.0}{100} \leqq \frac{A}{B-C} \leqq \frac{5.8}{100} \quad \cdots \text{(I)}$$

### Citation List

### Patent Literature

[Patent Literature 1] JP-A-2014-114342
[Patent Literature 2] WO2019/009038
[Patent Literature 3] JP-A-2019-143002
[Patent Literature 4] WO2021/132460
[Patent Literature 5] JP-A-2017-508840 (Translation of PCT Application)
[Patent Literature 6] JP-A-2020-189963

### Summary of Invention

### Technical Problem

Chloroprene-based polymer compositions containing a chloroprene-based polymer have been widely used in applications such as gloves, balloons, boots and catheters. Further, especially in medical rubber glove applications, there is a tendency to require a chloroprene-based polymer composition capable of obtaining a dip-molded article having an excellent flexibility as well as an excellent tensile strength at break, as with dip-molded articles obtained using natural rubber or polyisoprene. However, the flexibility of dip-molded article using a conventional chloroprene-based polymer

composition containing a chloroprene-based polymer may deteriorate after long-term storage, making it difficult to achieve both a tensile strength at break and flexibility after long-term storage.

The present invention has been made in view of these circumstances, and aims to provide a chloroprene-based polymer composition, capable of obtaining a dip-molded article having an excellent tensile strength at break and flexibility and having excellent flexibility after long-term storage.

**Solution to Problem**

According to the present invention, provided is a chloroprene-based polymer composition containing a chloroprene-based polymer, in which:

a peak of a weight average molecular weight of 5,000 to 80,000 is detected when a gel permeation chromatography measurement is performed on a tetrahydrofuran soluble component of the chloroprene-based polymer composition;
a toluene swelling degree of a dip-molded article for testing of the chloroprene-based polymer composition is 12.0 or less;
the dip-molded article for testing is obtained by molding a composition for forming a dip-molded body for testing by an immersion coagulation method and heat-drying at 140°C for 60 minutes;
the composition for forming a dip-molded body for testing contains 2 parts by mass of zinc oxide, 2 parts by mass of a butylated reaction product of p-cresol and dicyclopentadiene, 1.0 part by mass of 2-mercaptobenzimidazole, and 0.1 part by mass of sodium salt of β-naphthalenesulfonic acid formalin condensate, with respect to 100 parts by mass of a solid component of the chloroprene-based polymer composition;
the composition for forming a dip-molded body for testing further contains water whose amount is adjusted so that a solid component concentration of the composition for forming a dip-molded body for testing becomes 30 mass%; and
the toluene swelling degree is represented by Formula (1),

Toluene swelling degree = 1+(W2/W1-1)(P1/P2) (1/r) Formula (1):

in which W1 represents a mass of the dip-molded article for testing before immersed in toluene, W2 represents a mass of the dip-molded article after immersed in toluene, P1 represents a specific gravity of a rubber component of the chloroprene-based polymer composition, P2 represents a specific gravity of toluene, and r represents a mass fraction of the rubber component of the chloroprene-based polymer composition in the dip-molded article for testing.

Formula (1): Toluene swelling degree = (TB-TA)/TA × 100

in which TA represents a mass of the dip-molded article for testing before immersed in toluene, TB represents a mass of the dip-molded article after immersed in toluene.

The inventors have conducted intensive studies and have found that, in the chloroprene-based polymer composition containing the chloroprene-based polymer, if the peak of the weight average molecular weight of 5,000 to 80,000 is detected and the toluene swelling degree of the dip-molded article for testing prepared under specific conditions is within a specific range, the chloroprene-based polymer composition becomes a chloroprene-based polymer composition capable of obtaining a dip-molded article having an excellent tensile strength at break and flexibility as well as excellent flexibility after long-term storage, thereby leading to the completion of the present invention.

Hereinafter, various embodiments of the present invention are exemplified. The following embodiments can be combined with each other.

[1] A chloroprene-based polymer composition containing a chloroprene-based polymer, in which:

a peak of a weight average molecular weight of 5,000 to 80,000 is detected when a gel permeation chromatography measurement is performed on a tetrahydrofuran soluble component of the chloroprene-based polymer composition;
a toluene swelling degree of a dip-molded article for testing of the chloroprene-based polymer composition is 12.0 or less;
the dip-molded article for testing is obtained by molding a composition for forming a dip-molded body for testing by an immersion coagulation method and heat-drying at 140°C for 60 minutes;
the composition for forming a dip-molded body for testing contains 2 parts by mass of zinc oxide, 2 parts by mass of a butylated reaction product of p-cresol and dicyclopentadiene, 1.0 part by mass of 2-mercaptobenzimidazole,

and 0.1 part by mass of sodium salt of β-naphthalenesulfonic acid formalin condensate, with respect to 100 parts by mass of a solid component of the chloroprene-based polymer composition;
the composition for forming a dip-molded body for testing further contains water whose amount is adjusted so that a solid component concentration of the composition for forming a dip-molded body for testing becomes 30 mass%; and
the toluene swelling degree is represented by Formula (1),

Toluene swelling degree = 1+(W2/W1-1)(P1/P2) (1/r) Formula (1):

in which W1 represents a mass of the dip-molded article for testing before immersed in toluene, W2 represents a mass of the dip-molded article after immersed in toluene, P1 represents a specific gravity of a rubber component of the chloroprene-based polymer composition, P2 represents a specific gravity of toluene, and r represents a mass fraction of the rubber component of the chloroprene-based polymer composition in the dip-molded article for testing.

[2] The chloroprene-based polymer composition of [1], in which an amount of a toluene insoluble component is 50 to 90 mass%.

[3] The chloroprene-based polymer composition of [1] or [2], in which:

the chloroprene-based polymer composition contains a chloroprene monomer unit and a 2,3-dichloro-1,3-butadiene monomer unit; and
the chloroprene-based polymer composition contains 8 to 20 mass% of the 2,3-dichloro-1,3-butadiene monomer unit with respect to 100 mass% of a total of the chloroprene monomer unit and the 2,3-dichloro-1,3-butadiene monomer unit.

[4] The chloroprene-based polymer composition of any one of [1] to [3], wherein:

a low-temperature hardness change ΔH1 of the dip-molded article for testing is 30 or less;
the low-temperature hardness change ΔH1 is expressed as HB1-HA1;
the HA1 represents a Shore hardness measured in an environment at 23°C using a durometer type A after a plurality of the dip-molded articles for testing was heated at 70°C for 30 minutes and stacked to a thickness of 6.00 ±0.20 mm; and
the HB1 represents a Shore hardness measured in an environment at -10°C using a durometer type A after a plurality of the dip-molded articles for testing was heated at 70°C for 30 minutes, further stored at -10°C for 168 hours, and stacked to a thickness of 6.00±0.20 mm.

[5] The chloroprene-based polymer composition of any one of [1] to [4], in which a ratio RB/RA of a total amount RB of peak areas of abietic acid, neoabietic acid, palustric acid, levopimaric acid, and salts thereof to a total amount RA of peak areas of dehydroabietic acid, pimaric acid, isopimaric acid, dihydroabietic acid, and salts thereof is 0.10 or more and 0.70 or less; and the ratio RB/RA is obtained from a gas chromatography analysis of an extract extracted using an ethanol/toluene azeotropic mixture as specified in JIS K 6229.

[6] A chloroprene-based polymer latex, containing the chloroprene-based polymer composition of any one of [1] to [5] and water.

[7] A dip-molded article of a composition for forming a dip-molded body, the composition containing the chloroprene-based polymer latex of [6].

[8] The dip-molded article of [7], which is an industrial and household glove, a medical glove, a balloon, a catheter, or a boot.

[9] The dip-molded article of [7], in which:

a low-temperature hardness change ΔH2 of the dip-molded article is 30 or less;
the low-temperature hardness change ΔH2 is expressed as HB2-HA2;
the HA2 represents a Shore hardness measured in an environment at 23°C using a durometer type A after a

plurality of the dip-molded articles was heated at 70°C for 30 minutes and stacked to a thickness of 6.00±0.20 mm; and

the HB2 represents a Shore hardness measured in an environment at -10°C using a durometer type A after a plurality of the dip-molded articles was heated at 70°C for 30 minutes, stored at -10°C for 168 hours, and stacked to a thickness of 6.00±0.20 mm.

[10] A dip-molded article of a composition for forming a dip-molded body, the composition containing a chloroprene-based polymer latex, in which:

a low-temperature hardness change ΔH2 of the dip-molded article is 30 or less;

the low-temperature hardness change ΔH2 is expressed as HB2-HA2;

the HA2 represents a Shore hardness measured in an environment at 23°C using a durometer type A after a plurality of the dip-molded articles was heated at 70°C for 30 minutes and stacked to a thickness of 6.00±0.20 mm;

the HB2 represents a Shore hardness measured in an environment at -10°C using a durometer type A after a plurality of the dip-molded articles was heated at 70°C for 30 minutes, further stored at -10°C for 168 hours, and stacked to a thickness of 6.00±0.20 mm; and

the dip-molded article has a tensile strength at break measured in accordance with JIS K 6251 of 18.0 MPa or higher, and a modulus at 100% elongation of 0.65 MPa or lower.

## Advantageous Effects of Invention

According to the chloroprene-based polymer composition containing the chloroprene-based polymer of the present invention, a dip-molded article having an excellent tensile strength at break and flexibility and having excellent flexibility after long-term storage can be obtained. Further, the obtained dip-molded article can be used for various products and components which require an excellent tensile strength at break, flexibility after long-term storage, and the like, taking advantage of its characteristics. Specifically, it can be used as an industrial and household glove, a medical glove, a balloon, a catheter, or a boot.

## Description of Embodiments

Hereinafter, embodiments of the present invention will be exemplified to describe the present invention in detail. The present invention is not limited at all by these descriptions. Various distinctive features of embodiments of the present invention shown below can be combined with each other. In addition, the invention can be made independently for each distinctive feature.

### 1. Chloroprene-based Polymer Composition

The chloroprene-based polymer composition of the present invention contains a chloroprene-based polymer. Further, for the chloroprene-based polymer composition of the present invention, a peak of a weight average molecular weight of 5,000 to 80,000 is detected when a gel permeation chromatography measurement is performed on the tetrahydrofuran soluble component of the chloroprene-based polymer composition. Further, for the chloroprene-based polymer composition, a toluene swelling degree of the dip-molded article for testing is 12.0 or less.

The chloroprene-based polymer composition of the present invention contains at least one type of the chloroprene-based polymer. The chloroprene-based polymer of the present invention represents a polymer containing a monomer unit derived from 2-chloro-1,3-butadiene (hereinafter also referred to as chloroprene).

The chloroprene-based polymer composition of one embodiment of the present invention may contain a diene-based polymer A and a chloroprene-based polymer B. In the present invention, the diene-based polymer A means a polymer containing a diene-based monomer unit derived from a diene-based monomer. As described below, the diene-based polymer A of one embodiment of the present invention preferably contains a monomer unit derived from chloroprene. In other words, the chloroprene-based polymer composition of one embodiment of the present invention can also contain the chloroprene-based polymer A and the chloroprene-based polymer B. The diene-based polymer A and the chloroprene-based polymer B are described below.

For the chloroprene-based polymer composition of the present invention, a peak of a weight average molecular weight of 5,000 to 80,000 is detected when a gel permeation chromatography measurement is performed on the tetrahydrofuran soluble component of the chloroprene-based polymer composition. More specifically, for the chloroprene-based polymer composition of the present invention, in the molecular wight distribution obtained by the gel permeation chromatography measurement of the sample obtained by mixing the chloroprene-based polymer composition

with a large amount of methanol for precipitation, filtering and drying the precipitate to obtain polymers, and dissolving the polymers in tetrahydrofuran, a peak of a weight average molecular weight of 5,000 to 80,000 is detected.

For the chloroprene-based polymer composition of one embodiment of the present invention, in the molecular wight distribution obtained by the gel permeation chromatography measurement of the sample obtained by mixing the chloroprene-based polymer composition with a large amount of methanol for precipitation, filtering and drying the precipitate to obtain polymers, and dissolving the polymers in tetrahydrofuran, it is preferred that the peaks with a weight average molecular weight of 5,000 to 80,000 and the peaks with a weight average molecular weight of 200,000 to 1,500,000 be detected, it is more preferred that the peaks with a weight average molecular weight of 5,000 to 50,000 and the peaks with a weight average molecular weight of 300,000 to 1,500,000 be detected, and it is even more preferred that the peaks with a weight average molecular weight of 8,000 to 30,000 and the peaks with a weight average molecular weight of 500,000 to 1,500,000 be detected. The chloroprene-based polymer composition of one embodiment of the present invention preferably contains the diene-based polymer A having a weight average molecular weight of 5,000 to 80,000 and the chloroprene-based polymer B having a weight average molecular weight of 200,000 to 1,500,000, or the chloroprene-based polymer B having a weight average molecular weight of 5,000 to 80,000 and the diene-based polymer A having a weight average molecular weight of 200,000 to 1,500,000, more preferably contains the diene-based polymer A having a weight average molecular weight of 5,000 to 50,000 and the chloroprene-based polymer B having a weight average molecular weight of 300,000 to 1,500,000, or the chloroprene-based polymer B having a weight average molecular weight of 5,000 to 50,000 and the diene-based polymer A having a weight average molecular weight of 300,000 to 1,500,000, and even more preferably contains the diene-based polymer A having a weight average molecular weight of 8,000 to 30,000 and the chloroprene-based polymer B having a weight average molecular weight of 500,000 to 1,500,000, or the chloroprene-based polymer B having a weight average molecular weight of 8,000 to 30,000 and the diene-based polymer A having a weight average molecular weight of 500,000 to 1,500,000.

The chloroprene-based polymer composition of one embodiment of the present invention preferably contains 5 to 40 mass% of the polymer having a weight average molecular weight of 5,000 to 80,000 when the amount of the polymer contained in the chloroprene-based polymer composition is taken as 100 mass%. The content ratio of the polymer having a weight average molecular weight of 5,000 to 80,000 can be, for example, 5, 10, 15, 20, 25, 30, 35, or 40 mass%, and may be in the range between the two values exemplified herein.

The chloroprene-based polymer composition of one embodiment of the present invention preferably contains 60 to 95 mass% of the polymer having a weight average molecular weight of 200,000 to 1,500,000 when the amount of the polymer contained in the chloroprene-based polymer composition is taken as 100 mass%. The content ratio of the polymer having a weight average molecular weight of 200,000 to 1,500,000 is, for example, 60, 65, 70, 75, 80, 85, 90, or 95 mass%, and may be in the range between the two values exemplified herein.

The weight average molecular weight can be determined, for example, by analyzing the sample using gel permeation chromatography (GPC), the sample obtained by mixing the chloroprene-based polymer composition with a large amount of methanol for precipitation, filtering and drying the precipitate to obtain the chloroprene-based polymer composition, and dissolving it in tetrahydrofuran. The GPC measurement conditions can be as described in Examples. The weight average molecular weight can be controlled by adjusting production conditions, especially the polymerization formulation of the diene-based polymer A and the chloroprene-based polymer B contained in the chloroprene-based polymer composition, formulation such as type and amount of chain transfer agent contained in the chloroprene-based polymer composition, polymerization temperature, polymerization time, polymerization conversion rate, and the like.

In the chloroprene-based polymer composition of one embodiment of the present invention, the amount of the toluene insoluble component is preferably 50 to 90 mass%, and more preferably 60 to 85 mass%. The amount of the toluene insoluble component is, for example, 50, 55, 60, 65, 70, 75, 80, 85, or 90 mass%, and may be in the range between the two values exemplified herein.

The amount of the toluene insoluble component can be calculated by the following formula, specifically by the method described in Examples, when the chloroprene-based polymer composition obtained by freeze-drying a latex containing the chloroprene-based polymer composition is immersed in toluene for 16 hours, the amount of the chloroprene-based polymer composition after freeze-drying is taken as A g, and the amount of the gel component (insoluble component) separated from the mixture dissolved in toluene is taken as B g.

$$\text{Amount of toluene insoluble component (gel component)} = B/A \times 100\ (\%)$$

The toluene insoluble component can be controlled by adjusting the production conditions, such as the polymerization formulation of the polymer (e.g., diene-based polymer A or chloroprene-based polymer B) contained in the chloroprene-based polymer composition, the formulation of the type and amount of chain transfer agent contained in the chloroprene-based polymer composition, polymerization temperature, polymerization time, and polymerization conversion rate, and by adjusting the type and amount of the polymer (e.g., diene-based polymer A or chloroprene-based polymer B) blended.

The chloroprene-based polymer composition of one embodiment of the present invention preferably contains a chloroprene monomer unit and a 2,3-dichloro-1,3-butadiene monomer unit, and the chloroprene-based polymer composition preferably contains 8 to 20 mass%, and more preferably 10 to 17 mass% of the 2,3-dichloro-1,3-butadiene monomer unit, with respect to 100 mass% of the total of the chloroprene monomer unit and the 2,3-dichloro-1,3-butadiene monomer unit. The content ratio of the 2,3-dichloro-1,3-butadiene monomer unit is, for example, 8, 9, 10, 11, 12, 13, 14, 15, 16, 17, 18, 19, or 20 mass%, and may be in the range between the two values exemplified herein.

The chloroprene-based polymer composition of one embodiment of the present invention can contain 70 to 100 mass% of the chloroprene monomer unit when the amount of the chloroprene-based polymer composition is taken as 100 mass%. The content of the chloroprene-based monomer unit is, for example, 70, 75, 80, 85, 90, 91, 92, 93, 94, 95, 96, 97, 98, 99, or 100 mass%, and may be in the range between the two values exemplified herein.

The chloroprene-based polymer composition of one embodiment of the present invention can contain 0 to 30 mass% of an other monomer unit other than the chloroprene monomer unit and the 2,3-dichloro-1,3-butadiene monomer unit, when the amount of the chloroprene-based polymer composition is taken as 100 mass%. The content ratio of the other monomer unit is, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 mass%, and may be in the range between the two values exemplified herein. The chloroprene-based polymer of one embodiment of the present invention can also be composed of the chloroprene monomer unit and the 2,3-dichloro-1,3-butadiene monomer unit.

It should be noted that, when the chloroprene-based polymer composition is a mixture of two or more types of different chloroprene-based polymers, the content of each monomer unit means the total of each monomer unit in all chloroprene-based polymers contained in the chloroprene-based polymer composition.

The content ratio of the 2,3-dichloro-1,3-butadiene monomer unit in the chloroprene-based polymer composition can be calculated by measuring a test piece of the chloroprene-based polymer composition obtained by freeze-drying a latex containing the chloroprene-based polymer composition by pyrolysis gas chromatography, by determining the area ratio of the peak derived from chloroprene to the peak derived from 2,3-dichloro-1,3-butadiene, and by using a calibration curve with respect to the 2,3-dichloro-1,3-butadiene content. Specifically, it can be measured by the method in Examples.

The content ratio of the 2,3-dichloro-1,3-butadiene monomer unit in the chloroprene-based polymer composition can be controlled by adjusting the production conditions of the polymer contained in the chloroprene-based polymer composition, such as the types and amounts of raw materials blended and the amounts of the polymers (e.g., diene-based polymer A and chloroprene-based polymer B) blended.

For the chloroprene-based polymer composition of the present invention, the toluene swelling degree of the dip-molded article for testing is 12.0 or less, and preferably 10.0 or less. Further, the toluene swelling degree is represented by Formula (1) .

Formula (1): Toluene swelling degree = 1+(W2/W1-1)(P1/P2) (1/r) Formula (1):

In Formula (1), W1 represents the mass of the dip-molded article for testing before immersed in toluene, W2 represents the mass of the dip-molded article after immersed in toluene, P1 represents the specific gravity of the rubber component of the chloroprene-based polymer composition, P2 represents the specific gravity of toluene, and r represents the mass fraction of the rubber component of the chloroprene-based polymer composition in the dip-molded article for testing. Here, the rubber component of the chloroprene-based polymer composition means the chloroprene-based polymer component in the latex containing the chloroprene-based polymer composition which can be obtained by mixing the latex containing the chloroprene-based polymer composition with methanol for precipitation, followed by filtering and drying.

It should be noted that the specific gravity of the rubber component of the chloroprene-based polymer composition and the specific gravity of toluene can be those measured at 20°C, and P2 can be 0.867. P1 can be the specific gravity of the rubber component of the chloroprene-based polymer composition measured at 20°C, and P1 can be 1.23.

The toluene swelling degree of the dip-molded article for testing of the chloroprene-based polymer composition is, for example, 1.0, 2.0, 3.0, 4.0, 5.0, 6.0, 7.0, 8.0, 9.0, 10.0, 11.0, or 12.0, and may be within in the range between the two values exemplified herein.

The toluene swelling degree of the dip-molded article for testing of the chloroprene-based polymer composition is thought to be related to the crosslinking degree of the chloroprene-based polymer composition, and it is presumed that the higher the crosslinking degree is, the lower the swelling degree tends to be. The chloroprene-based polymer composition of the present invention becomes a chloroprene-based polymer composition capable of obtaining a dip-molded article having an excellent tensile strength at break and flexibility as well as excellent flexibility after long-term storage, if the peak of the weight average molecular weight of 5,000 to 80,000 is detected and the toluene swelling degree of the dip-molded

article for testing prepared under specific conditions is 12.0 or less.

The toluene swelling degree can be measured by the method described in Examples. The toluene swelling degree can be adjusted by appropriately selecting the production method of the chloroprene-based polymer composition. As an example, the chloroprene-based polymer composition having a toluene swelling degree of 12.0 or less can be obtained by a production method including a polymerization step of polymerizing the chloroprene-based polymer B in the presence of the diene-based polymer A, as described below.

For the chloroprene-based polymer composition of one embodiment of the present invention, the low-temperature hardness change ΔH1 of the test dip-molded article prepared using a composition for forming a dip-molded body for testing is preferably 30 or less, and more preferably 20 or less. The low-temperature hardness change ΔH1 is expressed as HB1-HA1. The low-temperature hardness change ΔH1 can be determined by storing the dip-molded article for testing at -10°C for 168 hours and subtracting the hardness before low-temperature storage from the hardness after low-temperature storage. Specifically, the HA1 represents the Shore hardness measured in an environment at 23°C using a durometer type A after a plurality of the dip-molded articles for testing was heated at 70°C for 30 minutes (before storing at -10°C for 168 hours) and stacked to a thickness of 6.00±0.20 mm. In addition, the HB1 represents the Shore hardness measured in an environment at -10°C using a durometer type A after a plurality of the dip-molded articles for testing was heated at 70°C for 30 minutes (before storing at -10°C for 168 hours), further stored at -10°C for 168 hours, and stacked to a thickness of 6.00±0.20 mm.

The low-temperature hardness change ΔH1 is, for example, 5, 6, 7, 8, 9, 10, 11, 12, 13, 14, 15, 16, 17, 18, 19, 20, 21, 22, 23, 24, 25, 26, 27, 28, 29, or 30, and may be in the range between the two values exemplified herein.

The low-temperature hardness change ΔH1 can be measured by the method described in Examples. It should be noted that the heat treatment at 70°C for 30 minutes is intended to melt the crystal structure contained in the dip-molded article for testing before storing at -10°C for 168 hours, and it is thought that the crystal structure is melted by performing the heat treatment at 70°C for 30 minutes. The low-temperature hardness change ΔH1 can be controlled by adjusting the production conditions of the chloroprene-based polymer composition.

For the chloroprene-based polymer composition of one embodiment of the present invention, the ratio RB/RA of the total amount RB of the peak areas of abietic acid, neoabietic acid, palustric acid, levopimaric acid, and the salts thereof to the total amount RA of the peak areas of dehydroabietic acid, pimaric acid, isopimaric acid, dihydroabietic acid, and the salts thereof is preferably 0.10 or more and 0.70 or less, and more preferably 0.15 or more and 0.50 or less, the ratio RB/RA obtained from the gas chromatography analysis of the extract extracted from the dip-molded article for testing prepared using the composition for forming a dip-molded body for testing using an ethanol/toluene azeotropic mixture as specified in JIS K 6229. The RB/RA is, for example, 0.10, 0.20, 0.30, 0.40, 0.50, 0.60, or 0.70, and may be in the range between the two values exemplified herein.

The RB/RA can be determined by extracting the extract from the dip-molded article for testing with an ethanol/toluene azeotropic mixture (ETA solution) specified in JIS K 6229, treating the extract with hydrochloric acid, analyzing the extract by gas chromatography, and calculating the ratio RB/RA ((conjugated resin acid component b)/(non-conjugated resin acid component a)) of the total amount RB of the peak areas of abietic acid, neoabietic acid, palustric acid, levopimaric acid, and the salts thereof to the total amount RA of the peak areas of dehydroabietic acid, pimaric acid, isopimaric acid, dihydroabietic acid, and the salts thereof. Specifically, it can be determined by the method described in Examples. The RB/RA can be controlled by adjusting the type and amount of emulsifier (particularly rosin acid and the salt thereof) used during emulsion polymerization of the polymer contained in the chloroprene-based polymer composition.

For the chloroprene-based polymer composition of one embodiment of the present invention, the tensile strength at break of the dip-molded article using the composition for forming a dip-molded body for testing, which is measured in accordance with JIS K6251, is preferably 18.0 MPa or higher, more preferably 19.0 MPa or higher, and even more preferably 20.0 MPa or higher. The tensile strength at break is, for example, 18.0, 19.0, 20.0, 21.0, 22.0, 23.0, 24.0, 25.0, 26.0, 27.0, 28.0, 29.0, 30.0, 31.0, 32.0, 33.0, 34.0, 35.0, 36.0, 37.0, 38.0, 39.0, or 40.0 MPa, and may be in the range between the two values exemplified herein.

For the chloroprene-based polymer composition of one embodiment of the present invention, the modulus at 100% elongation of the dip-molded article for testing prepared using the composition for forming a dip-molded body for testing, which is measured in accordance with JIS K 6251, is preferably 0.65 MPa or lower, and more preferably 0.60 MPa or lower. The modulus at 100% elongation is, for example, 0.30, 0.35, 0.40, 0.45, 0.50, 0.55, 0.60, or 0.65 MPa, and may be in the range between the two values exemplified herein.

For the chloroprene-based polymer composition of one embodiment of the present invention, the modulus at 100% elongation measured in accordance with JIS K 6251 after the dip-molded article of the composition for forming a dip-molded body containing the chloroprene-based polymer composition, particularly the dip-molded article for testing prepared using the composition for forming a dip-molded body for testing is stored at 23°C for 6 months, is preferably 0.80 MPa or lower, and more preferably 0.7 MPa or lower. The modulus at 100% elongation is, for example, 0.30, 0.35, 0.40, 0.45, 0.50, 0.55, 0.60, 0.65, 0.70, 0.75, or 0.80 MPa, and may be in the range between the two values exemplified herein.

The tensile strength at break, modulus at 100% elongation, and modulus at 100% elongation after storage at 23°C for 6 months of the dip-molded article containing the chloroprene-based polymer composition can be controlled by adjusting the weight average molecular weights of the diene-based polymer A and the chloroprene-based polymer B contained in the dip-molded article, type and content ratio of the monomer units contained, polymerization conditions of each polymer, blending ratio, and the like. It should be noted that the tensile strength at break, modulus at 100% elongation, and modulus at 100% elongation after storage at 23°C for 6 months can be measured as described in Examples.

The dip-molded article for testing can be obtained by molding the composition for forming a dip-molded body by an immersion coagulation method, and heat-drying at 140°C for 60 minutes. Here, the composition for forming a dip-molded body for testing can contain, with respect to 100 parts by mass of the solid component of the chloroprene-based polymer composition, 2 parts by mass of zinc oxide, 2 parts by mass of a butylated reaction product of p-cresol and dicyclopentadiene, 1.0 part by mass of 2-mercaptobenzimidazole, 0.1 part by mass of sodium salt of β-naphthalenesulfonic acid formalin condensate, and water, with the amount of water adjusted so that the solid component concentration of the composition for forming a dip-molded body for testing becomes 30 mass%. Specifically, it can be prepared by the method described in Examples.

## 2. Method for Producing Chloroprene-based Polymer Composition

The method for producing the chloroprene-based polymer composition of the present invention is not particularly limited. For example, the chloroprene-based polymer composition can be obtained by the following method.

The method for producing the chloroprene-based polymer composition of one embodiment of the present invention can include a polymerization step of polymerizing the chloroprene-based polymer B in the presence of the diene-based polymer A. Further, as described above, the chloroprene-based polymer composition of the present invention contains the diene-based polymer A and the chloroprene-based polymer B. The diene-based polymer A and the chloroprene-based polymer B may have different weight average molecular weights.

First, the diene-based polymer A and the chloroprene-based polymer B of one embodiment of the present invention will be described below.

### 2.1 Diene-based Polymer A

In the present invention, the diene-based polymer A means a polymer containing a diene-based monomer unit derived from a diene-based monomer. The diene-based polymer A may contain a monomer unit derived from a monomer other than the diene-based monomer and the like to the extent that the purpose of the present invention is not impaired.

The diene-based polymer A of one embodiment of the present invention can contain 50 to 100 mass% of the monomer unit derived from the diene-based monomer when the amount of the diene-based polymer A is taken as 100 mass%, and preferably contains 70 to 100 mass%. The content of the monomer unit derived from the diene-based monomer is, for example, 50, 55, 60, 65, 70, 75, 80, 85, 90, 91, 92, 93, 94, 95, 96, 97, 98, 99, or 100 mass%, and may be in the range between the two values exemplified herein.

The diene-based monomer can be a conjugated diene monomer having 4 to 6 carbon atoms, and specific examples thereof include 1,3-butadiene, isoprene, 2,3-dimethyl-1,3-butadiene, 1,3-pentadiene, chloroprene, 2,3-dichloro-1,3-butadiene, and 1-chloro-1,3-butadiene. The diene-based polymer A preferably contains a chloroprene monomer unit.

The diene-based polymer A of one embodiment of the present invention preferably includes at least one selected from the group consisting of natural rubber, isoprene-based polymer, butadiene-based polymer, styrene butadiene-based polymer, chloroprene-based polymer and acrylonitrile butadiene-based polymer.

The diene-based polymer A of one embodiment of the present invention preferably contains a monomer unit derived from chloroprene. Further, it preferably contains a monomer unit derived from 2,3-dichloro-1,3-butadiene. The diene-based polymer A of one embodiment of the present invention may not contain sulfur, and the chloroprene-based polymer of one embodiment of the present invention may not have an -S-S-structure caused by sulfur in the main chain.

The diene polymer A of one embodiment of the present invention can contain 50 to 100 mass% of the monomer unit derived from chloroprene when the amount of the diene-based polymer A is taken as 100 mass%, and preferably contains 70 to 100 mass%. The content of the monomer unit derived from chloroprene is, for example, 50, 55, 60, 65, 70, 75, 80, 85, 90, 91, 92, 93, 94, 95, 96, 97, 98, 99, or 100 mass%, and may be in the range between the two values exemplified herein.

The diene-based polymer A of one embodiment of the invention can contain 0 to 30 mass% of the monomer unit derived from 2,3-dichloro-1,3-butadiene when the amount of the diene-based polymer A is taken as 100 mass%. The content of the monomer unit derived from 2,3-dichloro-1,3-butadiene is, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 mass%, and may be in the range between the two values exemplified herein.

The diene-based polymer A of the present invention can have a different weight average molecular weight from the chloroprene-based polymer B. The difference between the weight average molecular weight of the diene-based polymer A of one embodiment of the present invention and the weight average molecular weight of the chloroprene-based polymer B described below is preferably 100,000 or more, and more preferably 400,000 or more. The difference between the weight average molecular weight of the diene-based polymer A and the weight average molecular weight of the chloroprene-based polymer B described below is, for example, 100,000, 200,000, 300,000, 400,000, 500,000, 600,000, 700,000, 800,000, 900,000, 1,000,000, 1,200,000, 1,300,000, 1,400,000, or 1,500,000, and may be in the range between the two values exemplified herein.

As an example, the weight average molecular weight of the diene-based polymer A can be smaller than that of the chloroprene-based polymer B. The weight average molecular weight of the diene-based polymer A can be 5,000 to 80,000. The weight average molecular weight of the diene-based polymer A is, for example, 5,000, 6,000, 7,000, 8,000, 9,000, 10,000, 11,000, 12,000, 13,000, 14,000, 15,000, 16,000, 17,000, 18,000, 19,000, 20,000, 21,000, 22,000, 23,000, 24,000, 25,000, 26,000, 27,000, 28,000, 29,000, 30,000, 35,000, 40,000, 50,000, 60,000, 70,000, or 80,000, and may be in the range between the two values exemplified herein.

As another example, the weight average molecular weight of the diene-based polymer A can be larger than that of the chloroprene-based polymer B. The weight average molecular weight of the diene-based polymer A can be 200,000 to 1,500,000. The weight average molecular weight of the diene-based polymer A is, for example, 200,000, 300,000, 400,000, 500,000, 600,000, 700,000, 800,000, 900,000, 1,000,000, 1,100,000, 1,200,000, 1,300,000, 1,400,000, or 1,500,000, and may be in the range between the two values exemplified herein.

The weight average molecular weight of the diene-based polymer A can be determined by analyzing the sample using gel permeation chromatography (GPC), the sample obtained by mixing a polymerization solution containing the diene-based polymer A, such as latex, with a large amount of methanol for precipitation, filtering and drying the precipitate to obtain the diene-based polymer A, and dissolving it in tetrahydrofuran. The GPC measurement conditions can be as described in Examples. The weight average molecular weight of the diene-based polymer A can be controlled in the polymerization of the diene polymer A by adjusting the polymerization formulation, formulation such as type and amount of chain transfer agent, polymerization temperature, polymerization time, and polymerization conversion rate, and the like, with particular control achieved by adjusting the type and amount of chain transfer agent.

2.2 Method for Producing Diene-based Polymer A

The method for producing the diene-based polymer A of the present invention is not particularly limited. As an example, the method for producing the diene-based polymer A of one embodiment of the present invention can include a diene-based polymer A polymerization step in which raw material monomers including a diene-based monomer are polymerized to obtain a diene-based polymer.

In the polymerization step, the raw material monomer includes one or more diene-based monomers, and can also include other monomers copolymerizable with the diene-based monomer. Examples of the diene-based monomer include 1,3-butadiene, isoprene, 2,3-dimethyl-1,3-butadiene, 1,3-pentadiene, chloroprene, 2,3-dichloro-1,3-butadiene, and 1-chloro-1,3-butadiene. Examples of the other monomer include copolymerizable with the diene-based monomer include styrene, methacrylic acid, acrylonitrile, and sulfur.

The type and amount of each monomer charged are preferably adjusted so that the content ratio of each monomer unit in the obtained diene-based polymer A is within the numerical range described above. As an example, if the diene-based polymer A contains the chloroprene monomer unit and the 2,3-dichloro-1,3-butadiene monomer unit, and the content of the 2,3-dichloro-1,3-butadiene monomer unit is 0 to 30 mass% with respect to 100 mass% of the total of the chloroprene monomer unit and the 2,3-dichloro-1,3-butadiene monomer unit, the amount of 2,3-dichloro-1,3-butadiene charged is preferably in the range of 0 to 30 parts by mass with respect to 100 parts by mass of the total of the chloroprene monomer and the 2,3-dichloro-1,3-butadiene monomer.

When producing the diene-based polymer A, the raw material monomers are polymerized by a polymerization method such as emulsion polymerization, solution polymerization, suspension polymerization, and bulk polymerization. Among these polymerization methods, emulsion polymerization is preferred because it has various advantages such as easy control, easy removal of polymer from the polymerization-completed solution and relatively high polymerization rate.

In the polymerization step of the diene-based polymer A, the raw material monomers can be polymerized by supplying them into a polymerization container together with a polymerization initiator as well as a chain transfer agent and a necessary agent such as solvent. As an example, in the case where the diene-based polymer A is polymerized by emulsion polymerization, the raw material monomers are polymerized by supplying them into a reaction vessel together with a chain transfer agent, water, alkali (e.g., metal hydroxides such as potassium hydroxide and sodium hydroxide), an emulsifier (dispersing agent), a reducing agent (e.g., sodium hydrogen sulfite), a polymerization initiator and the like.

The polymerization initiator is not particularly limited, and a known polymerization initiator commonly used for the polymerization of diene-based polymers can be used. Examples of the polymerization initiator include organic peroxides

such as potassium persulfate, ammonium persulfate, sodium persulfate, hydrogen peroxide, and t-butyl hydroperoxide.

The type of chain transfer agent used in emulsion polymerization is not particularly limited, and those commonly used in the polymerization of diene-based polymers can be used. Examples thereof include long chain alkyl mercaptans such as n-dodecyl mercaptan and tert-dodecyl mercaptan, dialkyl xanthogen disulfides such as diisopropyl xanthogen disulfide and diethyl xanthogen disulfide, and iodoform. As the chain transfer agent, long chain alkyl mercaptans are preferred, and n-dodecyl mercaptan is more preferred.

By adjusting the type and amount of the chain transfer agent, the weight average molecular weight of the obtained diene-based polymer A can be adjusted.

As an example, to obtain the diene-based polymer A having the weight average molecular weight of 5,000 to 80,000, the amount of the chain transfer agent charged before the start of emulsion polymerization is preferably set to 0.5 to 10.0 parts by mass with respect to 100 parts by mass of monomers. In this case, the amount of the chain transfer agent charged is, for example, 0.5, 1.0, 2.0, 3.0, 4.0, 5.0, 6.0, 7.0, 8.0, 9.0, or 10.0 parts by mass, and may be in the range between the two values exemplified herein.

Further, as an example, to obtain the diene-based polymer A having the weight average molecular weight of 200,000 or more, preferably 500,000 to 1,500,000, the amount of the chain transfer agent charged is preferably set to 0 parts by mass or more and less than 0.40 parts by mass with respect to 100 parts by mass of monomers. The amount of the chain transfer agent charged is more preferably 0.02 to 0.05 parts by mass, for example, 0, 0.005, 0.01, 0.02, 0.03, 0.04, 0.05, 0.06, 0.07, 0.08, 0.09, 0.10, 0.20, 0.30, or less than 0.40 parts by mass, and may be in the range between the two values exemplified herein. In particular, when attempting to obtain the diene-based polymer A having the weight average molecular weight of 200,000 or more, the chain transfer agent may not be used.

In the case of emulsion polymerization, the pH of the aqueous emulsion solution is preferably 10.5 to 13.5. The aqueous emulsion solution refers to the mixture of a chain transfer agent and monomers just before the start of emulsion polymerization, and also includes the case where the composition of each component changes due to the post addition or dividing addition of each component. When the pH of the aqueous emulsion solution at the start of emulsion polymerization is 10.5 or higher, the polymerization reaction can be controlled more stably. When the pH is 13.5 or lower, an excessive increase in viscosity during polymerization is suppressed and the polymerization reaction can be controlled more stably.

In the polymerization step, monomers include chloroprene and 2,3-dichloro-1,3-butadiene, and can also include other monomers copolymerizable with chloroprene and 2,3-dichloro-1,3-butadiene. The other monomers are as described above as monomer units that may be contained in the chloroprene-based polymer. Further, the type and amount of each monomer charged is preferably adjusted so that the content ratio of each monomer unit in the obtained chloroprene-based polymer is within the above-described numerical range.

The emulsifier preferably includes a rosin acid and/or a rosin acid salt. Examples of the rosin acid salt include alkali metal salts such as sodium salts and potassium salts. The amount of the rosin acid and the rosin acid salt added can be 3.0 to 7.0 parts by mass with respect to 100 parts by mass of the monomers used. The amount of the rosin acid and the rosin acid salt added is, for example, 3.0, 3.5, 4.0, 4.5, 5.0, 5.5, 6.0, 6.5, or 7.0 parts by mass, and may be in the range between the two values exemplified herein.

The rosin acid and/or rosin acid salt may contain a conjugated resin acid component and a non-conjugated resin acid component. Examples of the conjugated resin acid component include abietic acid, neoabietic acid, palustric acid, levopimaric acid, and the salts thereof. Examples of the non-conjugated resin acid component include dehydroabietic acid, pimaric acid, isopimaric acid, dihydropimaric acid, dihydroabietic acid, and the salts thereof.

For the rosin acid and the rosin acid salt used in the emulsion polymerization step, the ratio RB/RA of the total amount RB of the peak areas of abietic acid, neoabietic acid, palustric acid, levopimaric acid, and the salts thereof to the total amount RA of the peak areas of dehydroabietic acid, pimaric acid, isopimaric acid, dihydroabietic acid, and the salts thereof can be 0.10 or more and 0.70 or less, the RB/RA obtained from the gas chromatography analysis of the extract extracted using an ethanol/toluene azeotropic mixture as specified in JIS K 6229. The RB/RA of the rosin acid and rosin acid salt is, for example, 0.10, 0.20, 0.30, 0.40, 0.50, 0.60, or 0.70, and may be in the range between the two values exemplified herein. By adjusting the type and amount of the rosin acid and/or rosin acid salt, the RB/RA of the dip-molded article for testing of the chloroprene-based polymer composition obtained can be adjusted.

The emulsifier can also include emulsifiers or dispersing agents other than the rosin acids and rosin acid salts. As the emulsifier or dispersing agent other than the rosin acids and rosin acid salts, ationic, anionic, and nonionic emulsifiers and dispersing agents can be used. In one embodiment of the present invention, the emulsifiers used in the emulsion polymerization step can include the rosin acids and/or rosin acid salts, and anionic emulsifiers or dispersing agents. As the anionic emulsifier or dispersing agent, sulfate and sulfonate-based anionic emulsifiers or dispersing agents are preferably used in combination from the viewpoint of stabilizing chloroprene-based polymer latex when adding a pH adjusting agent. Specifically, alkyl sulfonates having 8 to 20 carbon atoms, alkyl aryl sulfates, condensation products of sodium β-naphthalene sulfonate and formaldehyde, and sodium alkyl diphenyl ether disulfonate can be mentioned. The amount of the anionic emulsifier or dispersing agent added can be 0.05 to 5 parts by mass with respect to 100 parts by mass of raw material monomers. The amount of anionic emulsifier or dispersing agent added is, for example, 0.05, 0.1, 0.2, 0.3, 0.5,

1.0, 1.5, 2.0, 2.5, 3.0, 3.5, 4.0, 4.5, or 5.0 parts by mass with respect to 100 parts by mass of raw material monomers, and may be in the range between the two values exemplified herein.

The polymerization temperature is preferably within the range of 5 to 55°C, because the emulsion solution does not freeze at 5°C or higher and there is no evaporation or boiling of the diene-based monomers at 55°C or lower.

The polymerization conversion rate is preferably in the range of 50 to 95%. The polymerization reaction is stopped by adding a polymerization terminator. When the desired polymerization conversion rate is reached, the polymerization reaction can be stopped by adding a polymerization terminator to stop the polymerization reaction, or the polymerization conversion rate can be adjusted by stopping the addition of the polymerization initiator.

Examples of the polymerization terminator include diethylhydroxylamine, thiodiphenylamine, 4-tert-butylcatechol, and 2,2'-methylenebis-4-methyl-6-tert-butylphenol. In the polymerization step of the diene-based polymer A of one embodiment of the present invention, a polymerization terminator may not be used. Unreacted monomers after polymerization can be removed by a conventional method such as distillation under reduced pressure.

In addition, a freeze stabilizer, an emulsion stabilizer, a viscosity modifier, an antioxidant, a preservative or the like can be optionally added after polymerization to the composition containing the diene-based polymer A obtained by the production method of one embodiment of the present invention (e.g., latex), to the extent that the effect of the present invention is not impaired.

In the polymerization step of the diene-based polymer A, the polymerization can start after all of the raw monomers and agents that are used in the polymerization step are charged before the start of polymerization, and at least a part of the raw material monomers and/or agents that are used in the polymerization step before the start of polymerization can be charged to the polymerization container, and the remainder can also be dividedly added after polymerization.

When at least a part of the raw material monomers and agents are charged to the polymerization container before the start of polymerization, and the remaining raw material monomers and/or agents are added after the start of polymerization, the remaining raw material monomers and/or agents can be added at batch, dividedly added several times, or continuously added at a constant flow rate. In one embodiment of the present invention, at least a part of the raw material monomers can be dividedly added after the start of polymerization. As an example, when chloroprene and 2,3-dichloro-1,3-butadiene are used as raw material monomers, a part of chloroprene can be dividedly added after the start of polymerization.

As an example, dividing addition of the remaining raw material monomers and/or agents can start when the polymerization rate of the raw material monomer charged before the start of polymerization reaches 50 to 95%. The polymerization rate at the start of dividing addition can be, for example, 50, 55, 60, 65, 70, 75, 80, 85, 90, or 95%, and may be in the range between the two values exemplified herein.

In the case where at least a part of the raw material monomers is added after the start of polymerization, 50 parts by mass or less of 100 mass parts of all raw material monomers used in the polymerization step can be added after the start of polymerization. In this case, the amount of raw material monomer added after the start of polymerization can be, for example, 0, 5, 10, 15, 20, 25, 30, 35, 40, 45, or 50 parts by mass, and may be in the range between the two values exemplified herein. As an example, the dividing addition of the raw material monomer, e.g., chloroprene, can be performed continuously over a period of 30 to 300 minutes.

2.3 Chloroprene-based Polymer B

The chloroprene-based polymer B of one embodiment of the present invention contains at least a chloroprene monomer unit, and can also be a copolymer of chloroprene and other monomers copolymerizable with chloroprene. Examples of the other monomer include 1-chloro-1,3-butadiene, 2,3-dichloro-1,3-butadiene, isoprene, styrene, methacrylic acid, acrylonitrile, and sulfur, and two or more types of these may be used in combination as the other monomers. The chloroprene-based polymer B of one embodiment of the present invention preferably contains the monomer unit derived from 2,3-dichloro-1,3-butadiene. The chloroprene-based polymer B of one embodiment of the present invention may not contain sulfur, and the chloroprene-based polymer B of one embodiment of the present invention may not have an -S-S-structure caused by sulfur in the main chain.

The chloroprene-based polymer B of one embodiment of the present invention can contain 50 to 100 mass% of the monomer unit derived from chloroprene when the amount of the chloroprene-based polymer B is taken as 100 mass%, and preferably contains 70 to 100 mass%. The content of the monomer unit derived from chloroprene is, for example, 50, 55, 60, 65, 70, 75, 80, 85, 90, 91, 92, 93, 94, 95, 96, 97, 98, 99, or 100 mass%, and may be in the range between the two values exemplified herein.

The chloroprene-based polymer B of one embodiment of the present invention can contain 0 to 30 mass% of the monomer unit derived from 2,3-dichloro-1,3-butadiene when the amount of the chloroprene-based polymer B is taken as 100 mass%. The content of the monomer unit derived from 2,3-dichloro-1,3-butadiene is, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 mass%, and may be in the range between the two values exemplified herein.

The chloroprene-based polymer B of the present invention can have a different weight average molecular weight from the diene-based polymer A. As mentioned above, the difference between the weight average molecular weight of the diene-based polymer A of one embodiment of the present invention and the weight average molecular weight of the chloroprene-based polymer B described below is preferably 100,000 or more, and more preferably 400,000 or more.

As an example, the weight average molecular weight of the chloroprene-based polymer B can be larger than that of the diene-based polymer A. The weight average molecular weight of the chloroprene-based polymer B can be 200,000 to 1,500,000. The weight average molecular weight of the chloroprene-based polymer B is, for example, 200,000, 300,000, 400,000, 500,000, 600,000, 700,000, 800,000, 900,000, 1,000,000, 1,100,000, 1,200,000, 1,300,000, 1,400,000, or 1,500,000, and may be in the range between the two values exemplified herein.

As another example, the weight average molecular weight of the chloroprene-based polymer B can be smaller than the molecular weight of the diene-based polymer A. The weight average molecular weight of the chloroprene-based polymer B can be 5,000 to 80,000. The weight average molecular weight of the chloroprene-based polymer B is, for example, 5,000, 6,000, 7,000, 8,000, 9,000, 10,000, 11,000, 12,000, 13,000, 14,000, 15,000, 16,000, 17,000, 18,000, 19,000, 20,00 0, 21,000, 22,000, 23,000, 24,000, 25,000, 26,000, 27,000, 28,000, 29,000, 30,000, 35,000, 40,000, 50,000, 60,000, 70,000, or 80,000, and may be in the range between the two values exemplified herein.

The weight average molecular weight of the chloroprene-based polymer B can be determined by analyzing the sample using gel permeation chromatography (GPC), the sample obtained by mixing a polymerization solution containing the chloroprene-based polymer B, such as chloroprene-based polymer composition (latex), with a large amount of methanol for precipitation, filtering and drying the precipitate to obtain the chloroprene-based polymer B, and dissolving it in tetrahydrofuran. The GPC measurement conditions can be as described in Examples. The weight average molecular weight of the chloroprene-based polymer B can be controlled in the polymerization of the chloroprene-based polymer B by adjusting the polymerization formulation, formulation such as type and amount of chain transfer agent, polymerization temperature, polymerization time, and polymerization conversion rate, and the like, with particular control achieved by adjusting the type and amount of chain transfer agent.

2.4 Method for Producing Chloroprene-based Polymer B

The method for producing a chloroprene-based polymer composition of one embodiment of the present invention can include a polymerization step of polymerizing the chloroprene-based polymer B in the presence of the diene-based polymer A.

According to one embodiment of the present invention, by polymerizing the chloroprene-based polymer B in the presence of the diene-based polymer A, it is possible to obtain the chloroprene-based polymer composition capable of obtaining a dip-molded article having a low modulus at 100% elongation, an excellent tensile strength at break, and a low modulus at 100% elongation after storage at 23°C for 6 months.

The mechanism, by which the chloroprene-based polymer composition capable of obtaining a dip-molded article having a low modulus at 100% elongation, an excellent tensile strength at break, and a low modulus at 100% elongation after storage at 23°C for 6 months can be obtained by polymerizing the chloroprene-based polymer B in the presence of the diene-based polymer A, is not necessarily clear. However, since the diene-based polymer A and chloroprene-based polymer B are mixed more highly uniformly in the chloroprene-based polymer composition obtained by polymerizing the chloroprene-based polymer B in the presence of the diene-based polymer A than in the chloroprene-based polymer composition obtained by separately polymerizing the diene-based polymer A and the chloroprene-based polymer B and mixing them after the polymerization, it is presumed that the obtained chloroprene-based polymer composition and the obtained dip-molded article have excellent physical properties.

The diene-based polymer A may be added to the polymerization solution in any form. For example, the polymerization solution in which the diene-based polymer A has been polymerized may be used as is. As an example, when the diene-based polymer A is polymerized by emulsion polymerization, a latex containing the diene-based polymer A may be added to the polymerization solution of the chloroprene-based polymer B. Further, for example, the diene-based polymer A may be precipitated from the polymerization solution in which the diene-based polymer A has been polymerized, and the precipitated diene-based polymer A may be added to the polymerization solution of the chloroprene-based polymer B. As an example, when the diene-based polymer A is polymerized by emulsion polymerization, the diene-based polymer A may be precipitated with methanol from the latex containing the diene-based polymer A and added to the polymerization solution of the chloroprene-based polymer B, or the diene-based polymer A obtained by freeze-drying the latex containing the diene-based polymer A may be added to the polymerization solution of the chloroprene-based polymer B.

In the polymerization step of polymerizing the chloroprene-based polymer B, when the amount of the chloroprene monomer (or raw material monomer) charged is taken as 100 parts by mass, the amount of the diene-based polymer A charged can be 5.0 to 60.0 parts by mass, or 40.0 to 95.0 parts by mass.

In one embodiment of the present invention, when the weight average molecular weight of the diene-based

polymer A is smaller than that of the chloroprene-based polymer B, for example, when the weight average molecular weight of the diene-based polymer A is 5,000 to 80,000, the amount of the diene-based polymer A charged can be 5.0 to 60.0 parts by mass with respect to 100 parts by mass of the amount of the chloroprene monomer (or raw material monomer) charged, and when the molecular weight of the diene-based polymer A is larger than that of the chloroprene-based polymer B, for example, when the weight average molecular weight of the diene-based polymer A is 200,000 to 1,500,000, the amount of the diene-based polymer A charged can be 40.0 to 95.0 parts by mass with respect to 100 parts by mass of the chloroprene monomer (or raw material monomer) charged.

When the weight average molecular weight of the diene-based polymer A is smaller than that of the chloroprene-based polymer B, the amount of the diene-based polymer A charged with respect to 100 parts by mass of the chloroprene polymer (or raw material monomer) charged is, for example, 5.0, 10.0, 15.0, 20.0, 25.0, 30.0, 35.0, 40.0, 50.0, or 60.0 parts by mass, and may be in the range between the two values exemplified herein. When the molecular weight of the diene-based polymer A is larger than that of the chloroprene-based polymer B, the amount of the diene-based polymer A charged with respect to 100 parts by mass of the chloroprene polymer (or raw material monomer) charged is, for example, 40.0, 50.0, 60.0, 65.0, 70.0, 75.0, 80.0, 85.0, 90.0, or 95.0 parts by mass, and may be in the range between the two values exemplified herein.

In the polymerization step, the raw monomers include chloroprene, and can also include other monomers copolymerizable with chloroprene. Examples of the other monomer include 1-chloro-1,3-butadiene, 2,3-dichloro-1,3-butadiene, 1,3-butadiene, isoprene, 2,3-dimethyl-1,3-butadiene, 1,3-pentadiene, styrene, methacrylic acid, acrylonitrile, and sulfur.

The type and amount of each monomer charged are preferably adjusted so that the content ratio of each monomer unit in the obtained chloroprene-based polymer B is within the numerical range described above.

When producing the chloroprene-based polymer B, the raw material monomer is polymerized by a polymerization method such as emulsion polymerization, solution polymerization, suspension polymerization, and bulk polymerization. Among these polymerization methods, emulsion polymerization is preferable because it has various advantages such as easy control, easy removal of polymer from the polymerization-completed solution and relatively high polymerization rate.

In the polymerization step of the chloroprene-based polymer B, the raw material monomers can be polymerized by supplying them into a polymerization container together with a polymerization initiator as well as a chain transfer agent and a necessary agent such as solvent. As an example, in the case where the chloroprene-based polymer B is polymerized by emulsion polymerization, the raw material monomers are polymerized by supplying them into a reaction vessel together with a chain transfer agent, water, alkali (e.g., metal hydroxides such as potassium hydroxide and sodium hydroxide), an emulsifier (dispersing agent), a reducing agent (e.g., sodium hydrogen sulfite), a polymerization initiator and the like.

The polymerization initiator is not particularly limited, and a known polymerization initiator commonly used for the polymerization of chloroprene-based polymers can be used. Examples of the polymerization initiator include organic peroxides such as potassium persulfate, ammonium persulfate, sodium persulfate, hydrogen peroxide, and t-butyl hydroperoxide.

The type of chain transfer agent used in emulsion polymerization is not particularly limited, and those commonly used in the polymerization of chloroprene can be used. Examples thereof include long chain alkyl mercaptans such as n-dodecyl mercaptan and tert-dodecyl mercaptan, dialkyl xanthogen disulfides such as diisopropyl xanthogen disulfide and diethyl xanthogen disulfide, and iodoform. As the chain transfer agent, long chain alkyl mercaptans are preferred, and n-dodecyl mercaptan is more preferred.

By adjusting the type and amount of the chain transfer agent, the weight average molecular weight of the obtained chloroprene-based polymer B can be adjusted.

As an example, to obtain the chloroprene-based polymer B having the weight average molecular weight of 200,000 or more, preferably 500,000 to 1,500,000, the amount of the chain transfer agent charged is preferably set to 0 parts by mass or more and less than 0.40 parts by mass with respect to 100 parts by mass of monomers. The amount of the chain transfer agent charged is more preferably 0 to 0.05 parts by mass, for example, 0, 0.005, 0.01, 0.02, 0.03, 0.04, 0.05, 0.06, 0.07, 0.08, 0.09, 0.10, 0.20, 0.30 pats by mass, or less than 0.40 parts by mass, and may be in the range between the two values exemplified herein. In particular, when attempting to obtain the chloroprene-based polymer B having the weight average molecular weight of 200,000 or more, the chain transfer agent may not be used.

Further, as an example, to obtain the chloroprene-based polymer B having the weight average molecular weight of 5,000 to 80,000, the amount of the chain transfer agent charged before the start of emulsion polymerization is preferably set to 0.5 to 10.0 mass parts with respect to 100 parts by mass of monomers. In this case, the amount of the chain transfer agent charged before the start of emulsion polymerization is, for example, 0.5, 1.0, 2.0, 3.0, 4.0, 5.0, 6.0, 7.0, 8.0, 9.0, or 10.0 parts by mass, and may be in the range between the two values exemplified herein.

By adjusting the weight average molecular weights of the diene-based polymer A and the chloroprene-based polymer B within the above numerical ranges and by adjusting the amount of the diene-based polymer A charged with respect to 100 parts by mass of chloroprene monomer charged within the above numerical range, the chloroprene-based

polymer composition, which is to be made into a dip-molded article having a lower modulus at 100% elongation and an more excellent tensile strength at break, is obtained.

In the case of emulsion polymerization, the pH of the aqueous emulsion solution is preferably 10.5 to 13.5. The aqueous emulsion solution refers to the mixture of a chain transfer agent and monomers just before the start of emulsion polymerization, and also includes the case where the composition of each component changes due to the post addition or dividing addition of each component. When the pH of the aqueous emulsion solution at the start of emulsion polymerization is 10.5 or higher, the polymerization reaction can be controlled more stably. When the pH is 13.5 or lower, an excessive increase in viscosity during polymerization is suppressed and the polymerization reaction can be controlled more stably.

In the polymerization step, monomers include chloroprene and 2,3-dichloro-1,3-butadiene, and can also include other monomers copolymerizable with chloroprene and 2,3-dichloro-1,3-butadiene. The other monomers are as described above as monomer units that may be contained in the chloroprene-based polymer. Further, the type and amount of each monomer is preferably adjusted so that the content ratio of each monomer unit in the obtained chloroprene-based polymer is within the above-described numerical range.

The emulsifier preferably includes a rosin acid and/or a rosin acid salt. Examples of the rosin acid salt include alkali metal salts such as sodium salts and potassium salts. The amount of the rosin acid and the rosin acid salt added can be 3.0 to 7.0 parts by mass with respect to 100 parts by mass of the monomers used. The amount of the rosin acid and the rosin acid salt added is, for example, 3.0, 3.5, 4.0, 4.5, 5.0, 5.5, 6.0, 6.5, or 7.0 parts by mass, and may be in the range between the two values exemplified herein.

The rosin acid and/or rosin acid salt can contain the conjugated resin acid component and the non-conjugated resin acid component. Examples of the conjugated resin acid component include abietic acid, neoabietic acid, palustric acid, levopimaric acid, and the salts thereof. Examples of the non-conjugated resin acid component include dehydroabietic acid, pimaric acid, isopimaric acid, dihydropimaric acid, dihydroabietic acid, and the salts thereof.

For the rosin acid and the rosin acid salt used in the emulsion polymerization step, the ratio RB/RA of the total amount RB of the peak areas of abietic acid, neoabietic acid, palustric acid, levopimaric acid, and the salts thereof to the total amount RA of the peak areas of dehydroabietic acid, pimaric acid, isopimaric acid, dihydroabietic acid, and the salts thereof can be 0.10 or more and 0.70 or less, the RB/RA obtained from the gas chromatography analysis of the extract extracted using an ethanol/toluene azeotropic mixture as specified in JIS K 6229. The RB/RA of the rosin acid and rosin acid salt is, for example, 0.10, 0.20, 0.30, 0.40, 0.50, 0.60, or 0.70, and may be in the range between the two values exemplified herein. By adjusting the type and amount of the rosin acid and/or rosin acid salt, the RB/RA of the dip-molded article for testing of the chloroprene-based polymer composition obtained can be adjusted.

The emulsifier can also include an emulsifier or a dispersing agent other than the rosin acids and rosin acid salts. As the emulsifier or dispersing agent other than the rosin acids and rosin acid salts, ationic, anionic, and nonionic emulsifiers and dispersing agents can be used. In one embodiment of the present invention, the emulsifiers used in the emulsion polymerization step can include the rosin acids and/or rosin acid salts, and anionic emulsifiers or dispersing agents. As the anionic emulsifier or dispersing agent, sulfate and sulfonate-based anionic emulsifiers or dispersing agents are preferably used in combination from the viewpoint of stabilizing chloroprene-based polymer latex when adding the pH adjusting agent. Specifically, alkyl sulfonates having 8 to 20 carbon atoms, alkyl aryl sulfates, condensation products of sodium β-naphthalene sulfonate and formaldehyde, and sodium alkyl diphenyl ether disulfonate can be mentioned. The amount of the anionic emulsifier or dispersing agent added can be 0.05 to 5 parts by mass with respect to 100 parts by mass of raw material monomers. The amount of anionic emulsifier or dispersing agent added is, for example, 0.05, 0.1, 0.2, 0.3, 0.5, 1.0, 1.5, 2.0, 2.5, 3.0, 3.5, 4.0, 4.5, or 5.0 parts by mass with respect to 100 parts by mass of raw material monomers, and may be in the range between the two values exemplified herein.

The polymerization temperature is preferably within the range of 5 to 55°C, because the emulsion solution does not freeze at 5°C or higher and there is no evaporation or boiling of chloroprene monomers at 55°C or lower.

The polymerization conversion rate is preferably in the range of 50 to 95%. The polymerization reaction is stopped by adding a polymerization terminator. When the desired polymerization conversion rate is reached, the polymerization reaction can be stopped by adding a polymerization terminator to stop the polymerization reaction.

Examples of the polymerization terminator include diethylhydroxylamine, thiodiphenylamine, 4-tert-butylcatechol, and 2,2'-methylenebis-4-methyl-6-tert-butylphenol. Unreacted monomers after polymerization can be removed by a conventional method such as distillation under reduced pressure.

In addition, a freeze stabilizer, an emulsion stabilizer, a viscosity modifier, an antioxidant, a preservative or the like can be optionally added after polymerization to the chloroprene-based polymer composition containing the diene-based polymer A and the chloroprene-based polymer B obtained by the production method of one embodiment of the present invention (e.g., latex), to the extent that the effect of the present invention is not impaired.

In the polymerization step of the chloroprene-based polymer B, the polymerization can start after all of the raw monomers and agents that are used in the polymerization step before the start of polymerization are charged, and at least a part of the raw material monomers and/or agents that are used in the polymerization step before the start of polymerization can be charged to the polymerization vessel, and the remainder can also be dividedly added after polymerization.

When at least a part of the raw material monomers and agents are charged in the polymerization container before the start of polymerization, and the remaining raw material monomers and/or agents are added after the start of polymerization, the remaining raw material monomers and/or agents can be added at batch, dividedly added several times, or continuously added at a constant flow rate. In one embodiment of the present invention, at least a part of the raw material monomers can be dividedly added after the start of polymerization. As an example, a part of the polymerization initiator can be dividedly added after the start of polymerization.

3. Chloroprene-based Polymer Latex

The chloroprene-based polymer latex of one embodiment of the present invention can contain the chloroprene-based polymer composition and water. The latex containing the chloroprene-based polymer composition containing the diene-based polymer A and the chloroprene-based polymer B, obtained after polymerization of the chloroprene-based polymer B, can be referred to as a chloroprene-based polymer latex. When the polymers contained in the chloroprene-based polymer composition of the present invention (e.g., diene-based polymer A and/or chloroprene-based polymer B) are obtained by emulsion polymerization, the chloroprene-based polymer latex can further contain raw materials used in the emulsion polymerization step, such as an emulsifier.

4. Dip-molded Article (Dip-molded Article Film, Film)

The dip-molded article of one embodiment of the present invention can be a dip-molded article of the composition for forming a dip-molded body containing the chloroprene-based polymer latex.

The dip-molded article of one embodiment of the present invention is obtained using the above-described chloroprene-based polymer composition. The dip-molded body can be obtained by dip-molding the composition for forming a dip-molded body described below, either alone or after blending with another composition for forming a dip-molded body. The dip-molded article of the present invention can be made by heat drying a dip-molded body at 140°C for 1 hour, the dip-molded body obtained by dip-molding the composition for forming a dip-molded body by the immersion coagulation method. The dip-molded article of the present invention has a high tensile strength at break, a low modulus at 100% elongation, and a low modulus at 100% elongation after long-term storage. The dip-molded article of one embodiment of the present invention can be suitably used as an industrial and household glove, a medical glove, a balloon, a catheter, or a boot.

The dip-molded article of the present invention may have a component contained in the above-described composition for forming a dip-molded body. Further, the dip-molded article can contain the diene-based polymer A and the chloroprene-based polymer B as base polymers, and when the amount of the dip-molded article is taken as 100 mass%, it can contain 70 mass% or more of the diene-based polymer A and the chloroprene-based polymer B. It preferably contains 80 mass% or more, and more preferably contains 90 mass% or more. When the amount of the dip-molded article is taken as 100 mass%, the content ratio of the diene-based polymer A and the chloroprene-based polymer B in the dip-molded article is, for example, 70, 75, 80, 85, 90, 95, 96, 97, 98, 99, or 100 mass%, and may be in the range between the two values exemplified herein.

The dip-molded article containing the chloroprene-based polymer of the present invention has a high tensile strength at break, a low modulus at 100% elongation, and a low modulus at 100% elongation after long-term storage, regardless of whether a vulcanizing agent and a vulcanization accelerator are added. The dip-molded article of one embodiment of the present invention may not contain a vulcanizing agent and a vulcanization accelerator, and may not also contain sulfur and a vulcanization accelerator such as thiuram-based, dithiocarbamate-based, thiourea-based, guanidine-based, xanthogenate-based, and thiazole-based vulcanization accelerators.

4.1 Property of Dip-molded Article

For the dip-molded article of one embodiment of the present invention, in a molecular weight distribution obtained by dissolving the dip-molded article in tetrahydrofuran and measuring the soluble component thereof by gel permeation chromatography, the peak having a weight average molecular weight of 5,000 to 80,000 is preferably detected, and the peak having a weight average molecular weight of 5,000 to 80,000 and the peak having a weight average molecular weight of 200,000 to 1,500,000 are preferably detected. In addition, the peak having a weight average molecular weight of 5,000 to 50,000 and the peak having a weight average molecular weight of 300,000 to 1,500,000 are more preferably detected, and the peak having a weight average molecular weight of 8,000 to 30,000 and the peak having a weight average molecular weight of 500,000 to 1,500,000 are even more preferably detected. The weight average molecular weight and blending ratio of the low molecular weight component and the high molecular weight component can be as described above.

The toluene swelling degree of the dip-molded article of one embodiment of the present invention is preferably

12.0 or less, and more preferably 10.0 or less. The toluene swelling degree is, for example, 1.0, 2.0, 3.0, 4.0, 5.0, 6.0, 7.0, 8.0, 9.0, 10.0, 11.0, or 12.0, and may be in the range between the two values exemplified herein.

For the dip-molded article of one embodiment of the present invention, the low-temperature hardness change ΔH2 is preferably 30 or less, and more preferably 20 or less. The low-temperature hardness change ΔH2 is, for example, 5, 6, 7, 8, 9, 10, 11, 12, 13, 14, 15, 16, 17, 18, 19, 20, 21, 22, 23, 24, 25, 26, 27, 28, 29, or 30, and may be in the range between the two values exemplified herein. The hardness change ΔH2 is expressed as HB2-HA2. The HA2 represents the Shore hardness measured in an environment at 23°C using a durometer type A after a plurality of the dip-molded articles was heated at 70°C for 30 minutes and stacked to a thickness of 6.00±0.20 mm, and the HB2 represents the Shore hardness measured in an environment at -10°C using a durometer type A after a plurality of the dip-molded articles was heated at 70°C for 30 minutes, futhrer stored at -10°C for 168 hours, and stacked to a thickness of 6.00±0.20 mm.

For the dip-molded article of one embodiment of the present invention, the ratio RB/RA of the total amount RB of the peak areas of abietic acid, neoabietic acid, palustric acid, levopimaric acid, and the salts thereof to the total amount RA of the peak areas of dehydroabietic acid, pimaric acid, isopimaric acid, dihydroabietic acid, and the salts thereof is preferably 0.10 or more and 0.70 or less, and more preferably 0.15 or more and 0.50 or less, the RB/RA obtained from the gas chromatography analysis of the extract extracted using an ethanol/toluene azeotropic mixture as specified in JIS K 6229. The RB/RA is, for example, 0.10, 0.20, 0.30, 0.40, 0.50, 0.60, or 0.70, and may be in the range between the two values exemplified herein.

For the dip-molded article of one embodiment of the present invention, the tensile strength at break measured in accordance with JIS K6251 is preferably 18.0 MPa or higher, more preferably 19.0 MPa or higher, and even more preferably 20.0 MPa or higher. The tensile strength at break is, for example, 18.0, 19.0, 20.0, 21.0, 22.0, 23.0, 24.0, 25.0, 26.0, 27.0, 28.0, 29.0, 30.0, 31.0, 32.0, 33.0, 34.0, 35.0, 36.0, 37.0, 38.0, 39.0, or 40.0 MPa, and may be in the range between the two values exemplified herein.

For the dip-molded article of one embodiment of the present invention, the modulus at 100% elongation of the dip-molded article containing the chloroprene-based polymer composition, which is measured in accordance with JIS K6251, is preferably 0.65 MPa or lower, and more preferably 0.60 MPa or lower. The modulus at 100% elongation is, for example, 0.30, 0.35, 0.40, 0.45, 0.50, 0.55, 0.60, or 0.65 MPa, and may be in the range between the two values exemplified herein.

For the dip-molded article of one embodiment of the present invention, the modulus at 100% elongation after storage at 23°C for 6 months, which is measured in accordance with JIS K6251, is preferably 0.80 MPa or lower, and more preferably 0.70 MPa or lower. The modulus at 100% elongation is, for example, 0.30, 0.35, 0.40, 0.45, 0.50, 0.55, 0.60, 0.65, 0.70, 0.75, 0.80, 0.85, 0.90, 0.95, or 1.00 MPa, and may be in the range between the two values exemplified herein.

The weight average molecular weight, toluene swelling degree, low-temperature hardness change ΔH2, RB/RA, tensile strength at break, modulus at 100% elongation, and modulus at 100% elongation after storage at 23°C for 6 months of the dip-molded article are measured by the methods described above in the section on the chloroprene-based polymer composition.

The dip-molded article of one embodiment of the present invention can have a low-temperature hardness change of 30 or less, and a tensile strength at break measured in accordance with JIS K 6251 of 18.0 MPa or higher. The dip-molded article of one embodiment of the present invention can have a low-temperature hardness change of 30 or less, a tensile strength at break measured in accordance with JIS K 6251 of 18.0 MPa or higher, and a modulus at 100% elongation of 0.65 MPa or lower. Further, the dip-molded article of one embodiment of the present invention can satisfy the above-described requirements in any two or more, three or more, four or more, five or more, six or more, or all of the weight average molecular weight, toluene swelling degree, low-temperature hardness change ΔH2, RB/RA, tensile strength at break, modulus at 100% elongation, and modulus at 100% elongation after storage at 23°C for 6 months.

The dip-molded article of one embodiment of the present invention contains the chloroprene-based polymer composition, and can further contain an antioxidant and a metal oxide. Further, the above-described dip-molded article may also contain a vulcanizing agent, a vulcanization accelerator, and an antiaging agent. The method for producing the dip-molded article can be as described in Examples.

Further, the weight average molecular weight, toluene swelling degree, low-temperature hardness change ΔH2, RB/RA tensile strength at break, modulus at 100% elongation, and modulus at 100% elongation after storage at 23°C for 6 months of the dip-molded article can be controlled by adjusting the production method of the chloroprene-based polymer composition, for example, the types and amounts of raw materials used in polymerizing the diene-based polymer A and the chloroprene-based polymer B, the types and amounts of agents used, and the polymerization conditions.

4.2 Shape of Dip-molded Article

The thickness of the dip-molded article (e.g., minimum thickness) may be 0.01 to 0.50 mm. The thickness of the dip-molded article is, for example, 0.01, 0.05, 0.10, 0.20, 0.30, 0.40, or 0.50 mm, and may be in the range between the two values exemplified herein. The thickness of the dip-molded article can be adjusted by the time for which the mold is immersed in the composition for forming a dip-molded body, the solid component concentration of the composition for

forming a dip-molded body, and the like. If it is desired to reduce the thickness of the dip-molded article, the immersion time may be shortened, or the solid component concentration of the composition for forming a dip-molded body may be lowered.

The dip-molded product may contain sulfur or a vulcanization accelerator. However, even if the dip-molded article does not contain sulfur and a vulcanization accelerator, it can have mechanical properties equivalent to or superior to those of a vulcanized dip-molded article obtained from the composition for forming a dip-molded body containing a conventional chloroprene-based polymer. For this reason, the chloroprene-based polymer composition of the present invention is suitably used as a raw material for the dip-molded article (dip-molded body) of the chloroprene-based polymer of the present embodiment.

5. Method for Producing Dip-molded Article

The method for producing the dip-molded article of one embodiment of the present invention can include:

a dip-molding step of dip-molding the above-described composition for forming a dip-molded body containing the above-described chloroprene-based polymer composition to obtain a dip-molded body; and
a drying step of heat drying the dip-molded body to obtain a dip-molded article.

5.1 Composition for Forming Dip-molded Body

The composition for forming a dip-molded body of one embodiment of the present invention contains the above-described chloroprene-based polymer composition. The composition for forming a dip-molded body of one embodiment of the present invention may contain a metal oxide, an antioxidant, and other necessary agents, in addition to the chloroprene-based polymer composition. The composition for forming a dip-molded body of one embodiment of the present invention may not contain a vulcanizing agent and a vulcanization accelerator, and may not contain sulfur and a vulcanization accelerator such as thiuram-based, dithiocarbamate-based, thiourea-based, guanidine-based, xanthogenate-based, and thiazole-based vulcanization accelerators.

5.1.1 Metal Oxide

The composition for forming a dip-molded body of one embodiment of the present invention can contain a metal oxide.

The metal oxide is not particularly limited, and examples thereof include zinc oxide, lead oxide, trilead tetroxide, magnesium oxide, aluminum oxide, iron oxide, beryllium oxide, and titanium oxide. The metal oxide preferably includes zinc oxide. Zinc oxide is generally considered to function as a scavenger for the dechlorination atoms of chloroprene-based polymers. In addition, one type of these metal oxides may be used alone, or two or more types of these may be mixed and used.

The amount of the metal oxide added is preferably 0.5 to 15.0 parts by mass, with respect to 100 parts by mass of the solid component of the chloroprene-based polymer composition contained in the composition for forming a dip-molded body. When the amount of the metal oxide added is 0.5 parts by mass or more, the tensile strength at break is expected to improve due to the crosslinking effect between the polymers. When the amount of the metal oxide added is 15.0 parts by mass or less, the dip-molded article with excellent flexibility can be obtained. Further, from the viewpoint of physical property balance between flexibility and tensile strength at break of the obtained dip-molded article, the amount of the metal oxide added is more preferably 0.5 to 5.0 parts by mass.

5.1.2 Antioxidant

The composition for forming a dip-molded body of one embodiment of the present invention can also contain an antioxidant. The antioxidant is not particularly limited, and phenolic antioxidants, amine antioxidants, heat-resistant oxidation (aging) antioxidants, ozone-resistant antioxidants, and the like can be used. When the obtained dip-molded article is used as a medical glove, a phenolic antioxidant can be used from the viewpoint of the color tone, texture, and hygiene of the dip-molded article. In particular, hindered phenolic antioxidants have the strong effect. Examples of the hindered phenolic antioxidant include 2,2'-methylenebis(4-ethyl-6-t-butylphenol), 2,2'-methylenebis(4-methyl-6-t-butylphenol), 4,4'-butylidene(3-methyl-6-t-butylphenol), 4,4'-thiobis(3-methyl-6-t-butylphenol), butylated reaction product of p-cresol and dicyclopentadiene, 2,5'-di-t-butylhydroquinone, and 2,5'-di-t-amylhydroquinone. Among these, a butylated reaction product of p-cresol and dicyclopentadiene is preferred from the viewpoint of being generally dispersible in aqueous materials. Further, one type of these compounds may be used alone, or two or more types of these may be mixed and used.

The amount of the antioxidant added is preferably 0.5 to 10.0 parts by mass, with respect to 100 parts by mass of the solid component of the chloroprene-based polymer composition contained in the composition for forming a dip-molded body. The amount of the antioxidant added is, for example, 1.0, 2.0, 3.0, 4.0, 5.0, 6.0, 7.0, 8.0, 9.0, or 10.0 parts by mass, and may be in the range between the two values exemplified herein. When the amount of the antioxidant added is 0.5 parts by mass or more, the effect of suppressing color tone change of the dip-molded article can be obtained. When the amount of the antioxidant added is 10.0 parts by mass or less, the stability of the composition for forming a dip-molded body is ensured. Further, from the viewpoint of physical property balance between flexibility and tensile strength at break of the obtained dip-molded article, the amount of the antioxidant added is more preferably 0.5 to 5.0 parts by mass.

5.1.3 Vulcanizing Agent and Vulcanization Accelerator

The composition for forming a dip-molded body of one embodiment of the present invention can also contain a vulcanizing agent and/or a vulcanization accelerator. In addition, the composition for forming a dip-molded body of one embodiment of the present invention may not contain sulfur and the vulcanization accelerator such as thiuram-based, dithiocarbamate-based, thiourea-based, guanidine-based, xanthate-based, and thiazole-based vulcanization accelerators. In other words, the composition for forming a dip-molded body includes those containing a vulcanizing agent but not containing a vulcanization accelerator, those not containing a vulcanizing agent but containing a vulcanization accelerator, those containing a vulcanizing agent and a vulcanization accelerator, and those not containing a vulcanizing agent and a vulcanization accelerator. Whether or not to incorporate a vulcanizing agent and a vulcanization accelerator may be determined depending on the intended dip-molded article.
Examples of the vulcanizing agent include sulfur, but the vulcanizing agent is not limited thereto. The amount of the vulcanizing agent added can be 0 to 10.0 parts by mass, with respect to 100 parts by mass of the solid component of the chloroprene-based polymer composition contained in the composition for forming a dip-molded body. The amount of the vulcanizing agent added is, for example, 0, 1, 2, 3, 4, 5, 6, 7, 8, 9, or 10 parts by mass, and may be in the range between the two values exemplified herein.
A vulcanization accelerator is an agent that is added during the vulcanization of raw rubber for the purpose of interacting with the vulcanizing agent to increase the vulcanization rate, shorten the vulcanization time, lower the vulcanization temperature, reduce the amount of vulcanizing agent, and improve the physical properties of the vulcanized rubber, and usually refers to an agent that accelerates the sulfur vulcanization reaction.
Examples of the vulcanization accelerator include thiuram-based, dithiocarbamate-based, thiourea-based, guanidine-based, xanthate-based, and thiazole-based vulcanization accelerators, but the vulcanization accelerator is not limited thereto. One type of these may be used alone, or two or more types of these may be used in combination as needed.
Examples of the thiuram-based vulcanization accelerator include tetramethylthiuram disulfide, tetraethylthiuram disulfide, tetrabutylthiuram disulfide, tetrakis(2-ethylhexyl) thiuram disulfide, tetramethylthiuram monosulfide, and dipentamethylenethiuram tetrasulfide.
Examples of the dithiocarbamate-based vulcanization accelerator include sodium dibutyldithiocarbamate, zinc dimethyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, and tellurium diethyldithiocarbamate. In particular, zinc dibutyldithiocarbamate is preferably used.
Examples of the thiourea-based vulcanization accelerator include ethylenethiourea, N,N'-diethylthiourea, trimethylthiourea, and N,N'-diphenylthiourea.
Examples of the guanidine-based vulcanization accelerator include 1,3-diphenylguanidine, 1,3-di-o-tolylguanidine, 1-o-tolylbiguanide, and di-o-tolylguanidine salt of dicatechol borate.
Examples of the xanthate-based vulcanization accelerator include zinc butylxanthate, and zinc isopropylxanthate.
Examples of the thiazole-based vulcanization accelerator include 2-mercaptobenzothiazole, di-2-benzothiazolyl disulfide, 2-mercaptobenzothiazole zinc salt, cyclohexylamine salt of 2-mercaptobenzothiazole, and 2-(4'-morpholinodithio) benzothiazole.
The amount of the vulcanization accelerator added can be 0 to 5.0 parts by mass, with respect to 100 parts by mass of the solid component of the chloroprene-based polymer composition contained in the composition for forming a dip-molded body. The amount of the vulcanization accelerator added is, for example, 0, 0.5, 1.0, 1.5, 2.0, 2.5, 3.0, 3.5, 4.0, 4.5, or 5.0, and may be in the range between the two values exemplified herein.

5.1.4 Other Agents (Heteroaromatic Ring Compound)

The composition for forming a dip-molded body of one embodiment of the present invention can contain a heteroaromatic ring compound in the chloroprene-based polymer.

The heteroaromatic ring compound contained in the composition for forming a dip-molded body used to obtain the dip-molded article of one embodiment of the present invention can be represented by Chemical Formula (1), and has a benzoimidazole structure. It should be noted that the compound having this structure may be employed mainly as a secondary antiaging agent in the formulation of rubber composition.

[Chem. 1]

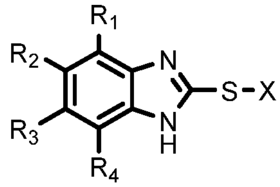

(1)

In Chemical Formula (1), X in the mercapto group represents a hydrogen atom or a metal atom. X can also be a hydrogen atom, giving a thiol group. X can also be a metal atom, and the examples of the metal atom include zinc, sodium, copper, nickel, and tellurium. Among these, zinc is preferred.

$R_1$ to $R_4$ in Chemical Formula (1) each represent a hydrogen atom, an alkyl group optionally having a substituted group, an ether group optionally having a substituted group, a nitro group, an amino group, or a carboxyl group. $R_1$ to $R_4$ may be the same as or different from each other. One type of the heteroaromatic ring compounds may be used alone, or two or more types of these may be mixed and used.

Examples of the heteroaromatic ring compound include 2-mercaptobenzoimidazole, 5-methyl-2-mercaptobenzoimidazole, 4-methyl-2-mercaptobenzoimidazole, 5-methoxy-2-mercaptobenzoimidazole, 4-methoxy-2-mercaptobenzoimidazole, 5-nitro-2-mercaptobenzoimidazole, 5-amino-2-mercaptobenzoimidazole, 5-carboxy-2-mercaptobenzoimidazole, and zinc salts of 2-mercaptobenzoimidazole. Among these, 2-mercaptobenzoimidazole, 5-methyl-2-mercaptobenzoimidazole, 4-methyl-2-mercaptobenzoimidazole, 5-methoxy-2-mercaptobenzoimidazole, 4-methoxy-2-mercaptobenzoimidazole, and zinc salts of 2-mercaptobenzoimidazole are preferred.

The amount of the heteroaromatic ring compound added is preferably 0.2 to 10.0 parts by mass with respect to 100 parts by mass of the solid component of the chloroprene-based polymer composition contained in the composition for forming a dip-molded body. The amount of the heteroaromatic ring compound added is, for example, 0.2, 0.3, 0.4, 0.5, 1.0, 2.0, 3.0, 4.0, 5.0, 6.0, 7.0, 8.0, 9.0, or 10.0 parts by mass, and may be in the range between the two values exemplified herein. When the amount of the heteroaromatic ring compound added is 0.2 parts by mass or more, the dip-molded article obtained using this composition exhibits very high rupture strength. When the amount of the heteroaromatic ring compound added is 10.0 parts by mass or less, the stability of the composition for forming a dip-molded body is ensured. From the viewpoint of balancing the properties of flexibility and rupture strength of the obtained dip-molded article, the amount of the heteroaromatic ring compound added is more preferably 0.3 to 5.0 parts by mass.

The method for producing the composition for forming a dip-mold body of one embodiment of the present invention can include a raw material mixing step of mixing raw materials including the chloroprene-based polymer composition, the metal oxide, the antioxidant, and other necessary agents.

In the raw material mixing step, it is also possible to prepare in advance an aqueous dispersion solution containing the metal oxide, antioxidant, and other necessary agents, and to mix the chloroprene-based polymer composition and the aqueous dispersion solution.

The raw material mixing step can be performed with a known mixing device such as a ball mill.

5.2 Dip-molding Step

The method for producing the dip-molded product of one embodiment of the present invention can include a dip-molding step of dip-molding the composition for forming a dip-molded body containing the chloroprene-based polymer composition obtained by the above-described method for producing the chloroprene-based polymer composition to obtain a dip-molded body.

Examples of the dip-molding method of one embodiment of the present invention include an immersion coagulation method, a simple immersion method, a heat-sensitive immersion method, and an electrodeposition method. The immersion coagulation method can be used from the viewpoint of easy production and easily obtaining a dip-molded body with a constant thickness. Specifically, a mold die made of ceramics coated with a calcium-based coagulating liquid is immersed in the composition for forming a dip-molded body, and the composition for forming a dip-molded body is coagulated. Then, after water-soluble impurities are removed by leaching, it is dried, and further heated and vulcanized to form a dip-molded film (rubber coating film), and then the dip-molded film is released from the mold. Thereby, a film-shaped dip-molded body can be obtained.

5.3 Drying Step

The method for producing the dip-molded article of one embodiment of the present invention can include a drying step of heating and drying the dip-molded body to obtain a dip-molded article.

The heat drying temperature may be appropriately set according to the composition of the chloroprene-based polymer composition, and may be 120 to 180°C. The heating temperature is preferably 120 to 150°C. The heating temperature is, for example, 120, 130, 140, 150, 160, 170, 180, 190, 200, 210, or 220°C, and may be in the range between the two values exemplified herein. The heating time may be appropriately set according to the composition of the chloroprene-based polymer composition, the shape of the unvulcanized body, or the like, and may be 10 to 300 minutes. The heating time is, for example, 10, 20, 30, 40, 50, 60, 70, 80, 90, 100, 110, 120, 130, 140, 150, 160, 170, 180, 190, 200, 210, 220, 230, 240, 250, 260, 270, 280, 290, or 300 minutes, and may be in the range between the two values exemplified herein. As an example, the dip-molded article of one embodiment of the present invention can be the one heat dried at 140°C for 1 hour.

## Examples

Hereinafter, the present invention will be explained in more detail based on Examples, but the present invention is not limited to these.

<Preparation of Chloroprene-based Polymer A>

(Synthesis Example A-1)

To a polymerization vessel with an internal volume of 30 liters, 64 parts by mass of chloroprene (monomer), 9 parts by mass of 2,3-dichloro-1,3-butadiene, 90 parts by mass of pure water, 4.5 parts by mass of conjugated resin acid-based rosinic acid (product name "Hartall R-WW", made by Harima Chemicals, Inc.), 3.4 parts by mass of n-dodecyl mercaptan, 1.6 parts by mass of potassium hydroxide, 0.5 parts by mass of sodium salt of β-naphthalenesulfonic acid formalin condensate (product name "Demol N", made by Kao Corporation), and 0.5 parts by mass of sodium hydrogen sulfite were added. Polymerization was carried out at a polymerization temperature of 35°C under a nitrogen stream by continuously adding 0.35 mass% potassium persulfate solution as a polymerization initiator. When the polymerization rate of the charged monomer reached 80%, 27 parts by mass of chloroprene (monomer) were continuously added over 100 minutes. When the polymerization rate of the initially charged monomer and the continuously added monomer reached 91%, the addition of potassium persulfate solution was stopped to stop the polymerization to obtain the polymerization liquid. The polymerization liquid was distilled under reduced pressure to remove the unreacted monomer, and concentrated to obtain a latex of the chloroprene-based polymer A-1 with a solid component concentration of 60 mass%. A part of the obtained latex was precipitated by the method described below to give the chloroprene-based polymer A-1, which was then used for analysis and for preparing the chloroprene-based polymers B in Examples 1, 2 and 8.

(Precipitation of Chloroprene-based Polymer A with Methanol)

The obtained latex of the chloroprene-based polymer A-1 was mixed with a large amount of methanol to precipitate the rubber component (chloroprene-based polymer A-1), which was then filtered and dried to obtain a sample of the chloroprene-based polymer A-1. This was also used to prepare the chloroprene-based polymer B in Examples 1, 2 and 8 described below.

(Synthesis Example A-2)

Polymerization was carried out in the same manner as in Synthesis Example A-1, except that the amount of n-dodecyl mercaptan in Synthesis Example A-1 was changed into 5.3 parts by mass. The obtained polymerization liquid was distilled under reduced pressure to remove unreacted monomers, and the latex of the chloroprene-based polymer A-2 with a solid component concentration of 60 mass% was obtained by concentration. The obtained latex was used to precipitate the chloroprene-based polymer A-2 in the same manner as in Synthesis Example A-1, which was used when preparing the chloroprene-based polymer B in Example 3.

(Synthesis Example A-3)

Polymerization was carried out in the same manner as in Synthesis Example A-1, except that the amount of n-dodecyl mercaptan in Synthesis Example A-1 was changed into 2.4 parts by mass. The obtained polymerization liquid was

distilled under reduced pressure to remove unreacted monomers, and the latex of the chloroprene-based polymer A-3 with a solid component concentration of 60 mass% was obtained by concentration. The obtained latex was used to precipitate the chloroprene-based polymer A-3 in the same manner as in Synthesis Example A-1, which was used when preparing the chloroprene-based polymer B in Example 4.

(Synthesis Example A-4)

Polymerization was carried out in the same manner as in Synthesis Example A-1, except that the amount of n-dodecyl mercaptan in Synthesis Example A-1 was changed into 1.5 parts by mass. The obtained polymerization liquid was distilled under reduced pressure to remove unreacted monomers, and the latex of the chloroprene-based polymer A-4 with a solid component concentration of 60 mass% was obtained by concentration. The obtained latex was used to precipitate the chloroprene-based polymer A-4 in the same manner as in Synthesis Example A-1, which was used when preparing the chloroprene-based polymer B in Example 5.

(Synthesis Example A-5)

Polymerization was carried out in the same manner as in Synthesis Example A-1, except that the amount of chloroprene (monomer) charged at the beginning of Synthesis Example A-1 was 70 parts by mass, the amount of 2,3-dichloro-1,3-butadiene was 0 parts by mass, and the amount of chloroprene (monomer) added during the polymerization was 30 parts by mass. The obtained polymerization liquid was distilled under reduced pressure to remove unreacted monomers and concentrated to obtain the latex of chloroprene-based polymer A-5 with a solid component concentration of 60 mass%. The obtained latex was used to precipitate the chloroprene-based polymer A-5 in the same manner as in Synthesis Example A-1, which was used in the preparation of the chloroprene-based polymer B in Example 6.

(Synthesis Example A-6)

To a polymerization vessel with an internal volume of 30 liters, 64 parts by mass of chloroprene (monomer), 9 parts by mass of 2,3-dichloro-1,3-butadiene, 77 parts by mass of pure water, 17.6 parts by mass of gum rosin-based disproportionated rosin aqueous solution (product name "RONJIS K-25", 25 mass% solid component, made by ARAKAWA CHEMICAL INDUSTRIES, LTD.), 3.4 parts by mass of n-dodecyl mercaptan, 0.8 parts by mass of potassium hydroxide, 0.5 parts by mass of sodium salt of β-naphthalenesulfonic acid formalin condensate (product name "Demol N", made by Kao Corporation), and 0.5 parts by mass of sodium hydrogen sulfite were added. Polymerization was carried out at a polymerization temperature of 35°C under a nitrogen stream by continuously adding 0.35 mass% potassium persulfate solution as a polymerization initiator. When the polymerization rate of the monomer charged reached 80%, 27 mass parts of chloroprene (monomer) was added continuously over 100 minutes. When the polymerization rate of the initially charged monomer and the continuously added monomer reached 91%, the addition of potassium persulfate solution was stopped to stop the polymerization to obtain the polymerization liquid. The polymerization liquid was distilled under reduced pressure to remove unreacted monomers and concentrated to obtain the latex of the chloroprene-based polymer A-6 with a solid component concentration of 60 mass%. The obtained latex was used in the same manner as in Synthesis Example A-1 to precipitate the chloroprene-based polymer A-6, which was used in the preparation of the chloroprene-based polymer B in Example 7.

<Preparation of Chloroprene-based Polymer B and Chloroprene-based Polymer Composition>

(Example 1)

To a polymerization vessel with an internal volume of 30 liters, 21.3 parts by mass of the chloroprene-based polymer A-1 prepared and precipitated in Synthesis Example A-1, 85 parts by mass of chloroprene (monomer), 15 parts by mass of 2,3-dichloro-1,3-butadiene, 100 parts by mass of pure water, 5.5 parts by mass of conjugated resin acid-based rosinic acid (product name "Hartall R-WW", made by Harima Chemicals, Inc.), 2 parts by mass of potassium hydroxide, 0.5 parts by mass of sodium salt of β-naphthalenesulfonic acid formalin condensate (product name "Demol N", made by Kao Corporation), 0.5 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a chloroprene-based polymer composition which has a solid component concentration of 60 mass% and contains the chloroprene-based polymer B-1.

50 ml of the chloroprene-based polymer latex was sampled, and the remaining chloroprene-based polymer latex was used to prepare the dip-molded article for testing.

The sampled chloroprene-based polymer latex was mixed with a large amount of methanol to precipitate the rubber component, filtered, and dried to obtain the sample of the chloroprene-based polymer composition. The weight average molecular weight of the chloroprene-based polymer composition was measured from the obtained sample. Further, the contents of 2,3-dichloro-1,3-butadiene and toluene insoluble component of the chloroprene-based polymer composition obtained by freeze-drying the chloroprene-based polymer latex were measured. The analysis results are shown in Table 1. The measurement method will be described below. The weight average molecular weight of the chloroprene-based polymer composition of Example 1 was measured, and a peak derived from the chloroprene-based polymer A having a weight average molecular weight of 5,000 to 80,000 and a peak derived from the chloroprene-based polymer B having a weight average molecular weight of 200,000 to 1,500,000 were confirmed.

(Example 2)

Polymerization was carried out in the same manner as in Example 1, except that the amounts of chloroprene (monomer) and 2,3-dichloro-1,3-butadiene in Example 1 were changed to 91 parts by mass and 9 parts by mass, respectively. The obtained polymerization liquid was distilled under reduced pressure to remove unreacted monomers and concentrated to obtain a chloroprene-based polymer composition which has a solid component concentration of 60 mass% and contains the chloroprene-based polymer B-2. The obtained latex was used to prepare a dip-molded article for testing in the same manner as in Example 1. Further, the weight average molecular weight, the content of 2,3-dichloro-1,3-butadiene, and the amount of the toluene insoluble component of the chloroprene-based polymer composition were measured in the same manner as in Example 1. The analysis results are shown in Table 1.

(Example 3)

To a polymerization vessel with an internal volume of 30 liters, 21.3 parts by mass of the chloroprene-based polymer A-2 prepared and precipitated in Synthesis Example A-2, 91 parts by mass of chloroprene (monomer), 9 parts by mass of 2,3-dichloro-1,3-butadiene, 100 parts by mass of pure water, 5.5 parts by mass of conjugated resin acid-based rosinic acid (product name "Hartall R-WW", made by Harima Chemicals, Inc.), 2 parts by mass of potassium hydroxide, 0.5 parts by mass of sodium salt of β-naphthalenesulfonic acid formalin condensate (product name "Demol N", made by Kao Corporation), 0.5 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a chloroprene-based polymer composition which has a solid component concentration of 60 mass% and contains the chloroprene-based polymer B-3. The obtained latex was used to prepare a dip-molded article for testing in the same manner as in Example 1. Further, the weight average molecular weight, the content of 2,3-dichloro-1,3-butadiene, and the amount of the toluene insoluble component of the chloroprene-based polymer composition were measured in the same manner as in Example 1. The analysis results are shown in Table 1.

(Example 4)

Polymerization was carried out in the same manner as in Example 3, except that the chloroprene-based polymer A-2 in Example 3 was replaced with the chloroprene-based polymer A-3. The obtained polymerization liquid was distilled under reduced pressure to remove unreacted monomers, and concentrated to obtain a chloroprene-based polymer composition which has a solid component concentration of 60 mass% and contains the chloroprene-based polymer B-4. The obtained latex was used to prepare a dip-molded article for testing in the same manner as in Example 1. Further, the weight average molecular weight, the content of 2,3-dichloro-1,3-butadiene, and the amount of the toluene insoluble component of the chloroprene-based polymer composition were measured in the same manner as in Example 1. The analysis results are shown in Table 1.

(Example 5)

Polymerization was carried out in the same manner as in Example 3, except that the chloroprene-based polymer A-2 in Example 3 was replaced with the chloroprene-based polymer A-4. The obtained polymerization liquid was distilled under reduced pressure to remove unreacted monomers, and concentrated to obtain a chloroprene-based polymer composition which has a solid component concentration of 60 mass% and contains the chloroprene-based polymer B-5.

The obtained latex was used to prepare a dip-molded article for testing in the same manner as in Example 1. Further, the weight average molecular weight, the content of 2,3-dichloro-1,3-butadiene, and the amount of the toluene insoluble component of the chloroprene-based polymer composition were measured in the same manner as in Example 1. The analysis results are shown in Table 1.

(Example 6)

Polymerization was carried out in the same manner as in Example 3, except that the chloroprene-based polymer A-2 in Example 3 was replaced with the chloroprene-based polymer A-5. The obtained polymerization liquid was distilled under reduced pressure to remove unreacted monomers, and concentrated to obtain a chloroprene-based polymer composition which has a solid component concentration of 60 mass% and contains the chloroprene-based polymer B-6. The obtained latex was used to prepare a dip-molded article for testing in the same manner as in Example 1. Further, the weight average molecular weight, the content of 2,3-dichloro-1,3-butadiene, and the amount of the toluene insoluble component of the chloroprene-based polymer composition were measured in the same manner as in Example 1. The analysis results are shown in Table 1.

(Example 7)

To a polymerization vessel with an internal volume of 30 liters, 21.3 parts by mass of the chloroprene-based polymer A-6 prepared and precipitated in Synthesis Example A-6, 91 parts by mass of chloroprene (monomer), 9 parts by mass of 2,3-dichloro-1,3-butadiene, 87 parts by mass of pure water, 17.6 parts by mass of gum rosin-based disproportionated rosin aqueous solution (product name "RONJIS K-25", 25 mass% solid component, made by ARAKAWA CHEMICAL INDUSTRIES, LTD.), 0.8 parts by mass of potassium hydroxide, 0.5 parts by mass of sodium salt of β-naphthalenesulfonic acid formalin condensate (product name "Demol N", made by Kao Corporation), 0.5 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a chloroprene-based polymer composition which has a solid component concentration of 60 mass% and contains the chloroprene-based polymer B-7. The obtained latex was used to prepare a dip-molded article for testing in the same manner as in Example 1. Further, the weight average molecular weight, the content of 2,3-dichloro-1,3-butadiene, and the amount of the toluene insoluble component of the chloroprene-based polymer composition were measured in the same manner as in Example 1. The analysis results are shown in Table 1.

(Example 8)

To a polymerization vessel with an internal volume of 30 liters, 45.8 parts by mass of the chloroprene-based polymer A-1 prepared and precipitated in Synthesis Example A-1, 91 parts by mass of chloroprene (monomer), 9 parts by mass of 2,3-dichloro-1,3-butadiene, 120 parts by mass of pure water, 6.5 parts by mass of conjugated resin acid-based rosinic acid (product name "Hartall R-WW", made by Harima Chemicals, Inc.), 2.4 parts by mass of potassium hydroxide, 0.6 parts by mass of sodium salt of β-naphthalenesulfonic acid formalin condensate (product name "Demol N", made by Kao Corporation), 0.6 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a chloroprene-based polymer composition which has a solid component concentration of 60 mass% and contains the chloroprene-based polymer B-8. The obtained latex was used to prepare a dip-molded article for testing in the same manner as in Example 1. Further, the weight average molecular weight, the content of 2,3-dichloro-1,3-butadiene, and the amount of the toluene insoluble component of the chloroprene-based polymer composition were measured in the same manner as in Example 1. The analysis results are shown in Table 1.

(Comparative Example 1)

To a polymerization vessel with an internal volume of 30 liters, 91 parts by mass of chloroprene (monomer), 9 parts by mass of 2,3-dichloro-1,3-butadiene, 100 parts by mass of pure water, 4.5 parts by mass of conjugated resin acid-based rosinic acid (product name "Hartall R-WW", made by Harima Chemicals, Inc.), 0.02 parts by mass of n-dodecyl

mercaptan, 1.6 parts by mass of potassium hydroxide, 0.5 parts by mass of sodium salt of β-naphthalenesulfonic acid formalin condensate (product name "Demol N", made by Kao Corporation), 0.5 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a chloroprene-based polymer composition which has a solid component concentration of 60 mass% and contains the chloroprene-based polymer C. Further, the obtained chloroprene-based polymer composition was used to prepare a dip-molded article for testing. Further, the weight average molecular weight, the content of 2,3-dichloro-1,3-butadiene, and the amount of the toluene insoluble component of the chloroprene-based polymer composition were measured in the same manner as in Example 1. The analysis results are shown in Table 1. Further, a part of the obtained chloroprene-based polymer composition was also used in Comparative Example 2.

(Comparative Example 2)

Polymerization was carried out in the same manner as in Synthesis Example A-1. The obtained polymerization liquid was distilled under reduced pressure to remove unreacted monomers, and concentrated to obtain the chloroprene-based polymer composition which has a solid component concentration of 60 mass% and contains the chloroprene-based polymer D.

The chloroprene-based polymer composition of the chloroprene-based polymer E was obtained by mixing the chloroprene-based polymer composition of the chloroprene-based polymer C obtained in Comparative Example 1 with the chloroprene-based polymer composition of the chloroprene-based polymer D in a mass ratio of C/D = 80/20. The obtained chloroprene-based polymer composition was used to prepare the dip-molded article for testing.

[Comparative Example 3]

To a polymerization vessel with an internal volume of 30 liters, 85 parts by mass of the chloroprene-based polymer A-1 prepared and precipitated in Synthesis Example A-1, 91 parts by mass of chloroprene (monomer), 9 parts by mass of 2,3-dichloro-1,3-butadiene, 150 parts by mass of pure water, 8.5 parts by mass of conjugated resin acid-based rosinic acid (product name "Hartall R-WW", made by Harima Chemicals, Inc.), 3 parts by mass of potassium hydroxide, 0.7 parts by mass of sodium salt of β-naphthalenesulfonic acid formalin condensate (product name "Demol N", made by Kao Corporation), 0.7 parts by mass of sodium hydrogen sulfite, and 0.03 parts by mass of thiourea dioxide were added. Polymerization was carried out at a polymerization temperature of 13°C under a nitrogen stream by continuously adding 0.35 mass% potassium persulfate solution as a polymerization initiator. When the polymerization rate of the charged monomer reached 85%, 0.1 parts by mass of diethylhydroxylamine was added as a polymerization terminator. The polymerization liquid was distilled under reduced pressure to remove unreacted monomers, and concentrated to obtain a chloroprene-based polymer composition which has a solid component concentration of 60 mass% and contains the chloroprene-based polymer B-9. The obtained latex was used to prepare a dip-molded article for testing in the same manner as in Example 1. Further, the weight average molecular weight, the content of 2,3-dichloro-1,3-butadiene, and the amount of the toluene insoluble component of the chloroprene-based polymer composition were measured in the same manner as in Example 1. The analysis results are shown in Table 1.

The following method was used to analyze the chloroprene-based polymer composition.

<Measurement of Weight Average Molecular Weight of Chloroprene-based Polymer Composition>

The weight average molecular weight was measured by gel permeation chromatography (GPC) under the following measurement conditions using the sample obtained by subjecting the chloroprene-based polymer composition to methanol precipitation, filtering, drying, and dissolving the resulting polymer in 20 ml of tetrahydrofuran, as described above.

Equipment Name: HLC-8320 (made by Tosoh Corporation)
Column: Three columns (TSKgel GMHHR-H) in series
Temperature: 40°C
Detection: differential refractive index
Solvent: tetrahydrofuran
Calibration Curve: prepared using standard polystyrene (PS)

<Measurement of 2,3-Dichloro-1,3-butadiene Content in Chloroprene-based Polymer Composition>

The chloroprene-based polymer composition obtained by freeze-drying the latex containing the chloroprene-based polymer composition was cut into a 0.05 mg test piece, and the area ratio of the peak derived from chloroprene to the peak derived from 2,3-dichloro-1,3-butadiene was determined by pyrolysis gas chromatography measurement. The content (mass%) of the 2,3-dichloro-1,3-butadiene monomer unit with respect to 100 mass% of the total of the chloroprene monomer unit and the 2,3-dichloro-1,3-butadiene monomer unit was determined using a calibration curve of the area ratio of the peak derived from chloroprene to the peak derived from 2,3-dichloro-1,3-butadiene and the 2,3-dichloro-1,3-butadiene content.

[Pyrolysis Gas Chromatography Measurement Condition]

Equipment Name: HP5890-II
Column: DB-5, 0.25 mm diemeter $\times$ 30 m (film thickness 1.0 $\mu$m)
Column Temperature: 50°C (5 min) $\rightarrow$ 10°C/min $\rightarrow$ 150°C $\rightarrow$ 25°C/min $\rightarrow$ 300°C
Injection Port Temperature: 250°C
Detector Temperature: 280°C
Detector: FID

<Toluene Insoluble Component>

A test piece was obtained by cutting the chloroprene-based polymer composition obtained by freeze-drying the latex containing the chloroprene-based polymer composition into a 2 mm square. The test piece was placed in a conical beaker and dissolved in 80 g of toluene for 16 hours. Next, after centrifugation, the gel component (insoluble component) was separated using a 200 mesh wire net. The gel component was then dried and the mass of the dried product was measured. The amount of the toluene insoluble component in the chloroprene-based polymer composition was calculated using the following formula, where A g is the amount of the chloroprene-based polymer composition after freeze-drying and B g is the amount of the gel component (insoluble component) separated from the mixture dissolved in toluene.

Amount of toluene insoluble component (gel component) = B/A $\times$ 100 (%)

Evaluation was performed by preparing the composition for forming a dip-molded body for testing by the following method using the above-described latex, i.e., the latex containing the chloroprene-based polymer composition, and by dip-molding it to obtain the dip-molded body, and further heat-drying the dip-molded body to produce a dip-molded article for testing.

<Preparation of Dip-molded Article>

The composition for forming a dip-molded body for testing was prepared by mixing 100 parts by mass of the solid component of the chloroprene-based polymer composition containing each chloroprene-based polymer with an aqueous dispersion, and adding water to adjust the total solid component concentration of the blend to 30 mass%. The above-described aqueous dispersion was prepared by mixing 2 parts by mass of Type 2 zinc oxide, 2 parts by mass of a butylated reaction product of p-cresol and dicyclopentadiene (product name "Nocrac PBK", made by Ouchi Shinko Chemical Industry Co., Ltd.), 1.0 parts by mass of 2-mercaptobenzoimidazole which is a heteroaromatic ring compound (product name "Noclac MB", made by Ouchi Shinko Chemical Industry Co., Ltd.), 0.1 part by mass of sodium salt of β-naphthalene sulfonic acid formalin condensate (product name "Demol N", made by Kao Corporation), and 10.7 parts by mass of water at 20°C for 16 hours using a ceramic ball mill. The obtained composition for forming a dip-molded body for testing contains 2 parts by mass of Type 2 zinc oxide, 2 parts by mass of a butylated reaction product of p-cresol and dicyclopentadiene (product name "Nocrac PBK", made by Ouchi Shinko Chemical Industry Co., Ltd.), 1.0 parts by mass of 2-mercaptobenzoimidazole which is a heteroaromatic ring compound (product name "Noclac MB", made by Ouchi Shinko Chemical Industry Co., Ltd.), 0.1 part by mass of sodium salt of β-naphthalenesulfonic acid formalin condensate (product name "Demol N", made by Kao Corporation), and water, with respect to 100 parts by mass of the solid component of the chloroprene-based polymer composition.

A ceramic cylindrical mold with an outer diameter of 50 mm (made by Shinko Ceramics Co., Ltd.) was immersed for 1 second in a coagulation liquid containing 62 parts by mass of water, 35 parts by mass of potassium nitrate

tetrahydrate, and 3 parts by mass of calcium carbonate, and then removed. After drying for 3 minutes, the mold was immersed for 2 minutes in the composition for forming a dip-molded body for testing prepared by the above-mentioned procedure. The mold was then washed with running water at 45°C for 1 minute and dried at 140°C for 1 hour to prepare a dip-molded article film for testing.

(Film Thickness)

The thickness (film thickness) of the center of the dip-molded article film for testing and tensile property evaluation was measured at three points using a test piece thickness gauge (made by Kobunshi Keiki Co., Ltd., product name: ASKER SDA-12), and the minimum thickness was obtained as the thickness of the dip-molded article for testing. The results are shown in Table 1.

(Measurement of Tensile Property)

The modulus at 100% elongation and tensile strength at break were measured in accordance with JIS K 6251 using the dip-molded article film for testing and tensile property evaluation. In addition, the compositions for forming a dip-molded body in each of Examples and Comparative Examples were stored at 23°C for 6 months, and the modulus at 100% elongation was measured in accordance with JIS K 6251. The results are shown in Table 1.

(Toluene Swelling Degree)

The dip-molded article for testing was cut into 10 mm × 15 mm to obtain a test piece. The mass W1 of the obtained test piece before immersion was measured, and the test piece was then immersed in toluene for 20 hours in an environment at 23°C. After immersion, the test piece was removed from toluene, and the toluene on the film surface was wiped off. Thereafter, the mass W2 after immersion was measured. The toluene swelling degree was calculated from the mass W1 before immersion and the mass W2 after immersion measured, using the following formula. The results are shown in Table 1.

$$\text{Toluene swelling degree} = 1+(W2/W1-1)(P1/P2)(1/r)$$

P1: Specific gravity of the rubber component of the chloroprene-based polymer composition
P2: Specific gravity of toluene
r: Mass fraction of the rubber component of the chloroprene-based polymer composition in the dip-molded article

It should be noted that the calculation was performed assuming P1 of 1.23 and P2 of 0.867. The rubber component of the chloroprene-based polymer composition means the chloroprene-based polymer in the latex containing the chloroprene-based polymer composition, which can be obtained by mixing the latex containing the chloroprene-based polymer composition of Examples and Comparative Examples with methanol for precipitation, and filtering and drying the precipitate. The specific gravity of the rubber component of the chloroprene-based polymer composition was calculated by measuring the density of the rubber component of the chloroprene-based polymer composition obtained by the above-described method at room temperature (20°C).

(Low-temperature Hardness Change)

The dip-molded article for testing was stored at -10°C for 168 hours, and the low-temperature hardness change was calculated from the hardnesses of the dip-molded article for testing before and after storage using Formula (2). The results are shown in Table 1.

$$\text{Formula (2): } \Delta H = HB - HA$$

In Formula (2), the HA represents the Shore hardness measured in an environment at 23°C using a durometer type A after a plurality of the dip-molded articles for testing, which had not yet been stored at -10°C for 168 hours, was heated at 70°C for 30 minutes and stacked to a thickness of 6.00±0.20 mm, and the HB represents the Shore hardness measured in an environment at -10°C using a durometer type A after a plurality of the dip-molded articles for testing, which had not yet been stored at - 10°C for 168 hours, was heated at 70°C for 30 minutes, further stored at -10°C for 168 hours, and stacked to a thickness of 6.00±0.20 mm. For example, when the thickness of the dip-molded article for testing was 0.20 mm, 30 pieces of the dip-molded articles for testing were stacked and the hardness was measured.

(Ratio RB/RA of Total Amount RB of Peak Areas of Abietic Acid, Neoabietic Acid, Palustric Acid, Levopimaric Acid, and Salts thereof to Total Amount RA of Peak Areas of Dehydroabietic Acid, Pimaric Acid, Isopimaric Acid, Dihydroabietic Acid, and Salts Thereof)

A test piece was obtained by cutting 3 g of the above-described dip-molded article for testing into a 2 mm square. After placing the test piece in an eggplant flask equipped with a condenser, gas chromatography measurement was performed under the following conditions using the extract obtained by extraction with an ethanol/toluene azeotropic mixture (ETA solution) specified in JIS K 6229 and performing a hydrochloric acid treatment. From the results of gas chromatography measurement, the total amount RA of the peak areas of dehydroabietic acid, pimaric acid, isopimaric acid, dihydroabietic acid, and the salts thereof was determined. In addition, the total amount RB of the peak areas of abietic acid, neoabietic acid, palustric acid, levopimaric acid, and the salts thereof was determined, and the ratio RB/RA ((conjugated resin acid component b)/(non-conjugated resin acid component a)) of the total amount RB of the peak areas of abietic acid, neoabietic acid, palustric acid, levopimaric acid, and the salts thereof to the total amount RA of the peak areas of dehydroabietic acid, pimaric acid, isopimaric acid, dihydroabietic acid, and the salts thereof in the dip-molded article for testing was calculated.

[Gas Chromatography Measurement Condition]

Column Used: FFAP, 0.32 mm diameter × 25 m (film thickness 0.3 um)
Detector: FID
Column Temperature: 200°C (held for 90 min) → 250°C
Heating Rate: 10°C/min
Injection Port Temperature: 270°C
Detector Temperature: 270°C
Injection Volume: 2 μL

[Table 1]

| Table 1 | | | Example | | | | | | | | Comparative Example | | |
|---|---|---|---|---|---|---|---|---|---|---|---|---|---|
| | | | 1 | 2 | 3 | 4 | 5 | 6 | 7 | 8 | 1 | 2 | 3 |
| Analysis Results of Chloroprene-based Polymer Composition | Peak of Weight Average Molecular Weight of 5,000 to 80,000 | g/mol | 19,122 | 19,122 | 8,885 | 29,647 | 44,587 | 19,502 | 19,344 | 19,122 | - | 19,122 | 19,122 |
| | 2,3-Dichloro-1,3-butadiene Content | mass% | 16.5 | 11.1 | 11.1 | 11.1 | 11.1 | 9.0 | 11.1 | 10.9 | 11.3 | 11.1 | 13.0 |
| | Amount of Toluene Insoluble Component | mass% | 65.1 | 68.6 | 64.6 | 73.2 | 79.5 | 66.4 | 67.3 | 56.3 | 84.5 | 69.3 | 46.3 |
| Measurement Results of Dip-molded Article | Toluene Swelling Degree | - | 9.5 | 9.6 | 9.4 | 9.6 | 9.7 | 9.5 | 9.5 | 10.2 | 9.9 | 13.0 | 17.0 |
| | Low-temperature Hardness Change | - | 16 | 18 | 18 | 18 | 24 | 23 | 18 | 18 | 32 | 31 | 18 |
| | RB/RA | - | 0.27 | 0.28 | 0.28 | 0.27 | 0.26 | 0.27 | 0.00 | 0.28 | 0.26 | 0.26 | 0.28 |
| Tensile Properties of Dip-molded Article | Film Thickness | mm | 0.20 | 0.20 | 0.21 | 0.19 | 0.20 | 0.21 | 0.20 | 0.20 | 0.19 | 0.20 | 0.21 |
| | Modulus at 100% Elongation | MPa | 0.57 | 0.53 | 0.50 | 0.56 | 0.64 | 0.58 | 0.52 | 0.47 | 0.81 | 0.46 | 0.31 |
| | Tensile Strength at Break | MPa | 22.1 | 21.2 | 20.4 | 21.9 | 22.3 | 21.0 | 19.8 | 19.1 | 23.8 | 16.8 | 14.9 |
| | Modulus at 100% Elongation After Storage at 23°C for 6 Months | MPa | 0.60 | 0.59 | 0.55 | 0.63 | 0.78 | 0.77 | 0.55 | 0.51 | 1.10 | 0.81 | 0.36 |

## Claims

**1.** A chloroprene-based polymer composition containing a chloroprene-based polymer, wherein:

a peak of a weight average molecular weight of 5,000 to 80,000 is detected when a gel permeation chromatography measurement is performed on a tetrahydrofuran soluble component of the chloroprene-based polymer composition;
a toluene swelling degree of a dip-molded article for testing of the chloroprene-based polymer composition is 12.0 or less;
the dip-molded article for testing is obtained by molding a composition for forming a dip-molded body for testing by an immersion coagulation method and heat-drying at 140°C for 60 minutes;
the composition for forming a dip-molded body for testing contains 2 parts by mass of zinc oxide, 2 parts by mass of a butylated reaction product of p-cresol and dicyclopentadiene, 1.0 part by mass of 2-mercaptobenzimidazole, and 0.1 part by mass of sodium salt of β-naphthalenesulfonic acid formalin condensate, with respect to 100 parts by mass of a solid component of the chloroprene-based polymer composition;
the composition for forming a dip-molded body for testing further contains water whose amount is adjusted so that a solid component concentration of the composition for forming a dip-molded body for testing becomes 30 mass%; and
the toluene swelling degree is represented by Formula (1),

Toluene swelling degree = 1+(W2/W1-1)(P1/P2) (1/r)     Formula (1):

wherein W1 represents a mass of the dip-molded article for testing before immersed in toluene, W2 represents a mass of the dip-molded article after immersed in toluene, P1 represents a specific gravity of a rubber component of the chloroprene-based polymer composition, P2 represents a specific gravity of toluene, and r represents a mass fraction of the rubber component of the chloroprene-based polymer composition in the dip-molded article for testing.

**2.** The chloroprene-based polymer composition of Claim 1, wherein an amount of a toluene insoluble component is 50 to 90 mass%.

**3.** The chloroprene-based polymer composition of Claim 1 or 2, wherein:

the chloroprene-based polymer composition contains a chloroprene monomer unit and a 2,3-dichloro-1,3-butadiene monomer unit; and
the chloroprene-based polymer composition contains 8 to 20 mass% of the 2,3-dichloro-1,3-butadiene monomer unit with respect to 100 mass% of a total of the chloroprene monomer unit and the 2,3-dichloro-1,3-butadiene monomer unit.

**4.** The chloroprene-based polymer composition of Claim 1 or 2, wherein:

a low-temperature hardness change ΔH1 of the dip-molded article for testing is 30 or less;
the low-temperature hardness change ΔH1 is expressed as HB1-HA1;
the HA1 represents a Shore hardness measured in an environment at 23°C using a durometer type A after a plurality of the dip-molded articles for testing was heated at 70°C for 30 minutes and stacked to a thickness of 6.00 ±0.20 mm; and
the HB1 represents a Shore hardness measured in an environment at -10°C using a durometer type A after a plurality of the dip-molded articles for testing was heated at 70°C for 30 minutes, further stored at -10°C for 168 hours, and stacked to a thickness of 6.00±0.20 mm.

**5.** The chloroprene-based polymer composition of Claim 1 or 2, wherein:

a ratio RB/RA of a total amount RB of peak areas of abietic acid, neoabietic acid, palustric acid, levopimaric acid, and salts thereof to a total amount RA of peak areas of dehydroabietic acid, pimaric acid, isopimaric acid, dihydroabietic acid, and salts thereof is 0.10 or more and 0.70 or less; and
the ratio RB/RA is obtained from a gas chromatography analysis of an extract extracted using an ethanol/toluene azeotropic mixture as specified in JIS K 6229.

**6.** A chloroprene-based polymer latex, containing the chloroprene-based polymer composition of Claim 1 or 2 and water.

**7.** A dip-molded article of a composition for forming a dip-molded body, the composition containing the chloroprene-based polymer latex of Claim 6.

**8.** The dip-molded article of Claim 7, which is an industrial and household glove, a medical glove, a balloon, a catheter, or a boot.

**9.** The dip-molded article of Claim 7, wherein:

a low-temperature hardness change $\Delta H2$ of the dip-molded article is 30 or less;
the low-temperature hardness change $\Delta H2$ is expressed as HB2-HA2;
the HA2 represents a Shore hardness measured in an environment at 23°C using a durometer type A after a plurality of the dip-molded articles was heated at 70°C for 30 minutes and stacked to a thickness of $6.00 \pm 0.20$ mm; and
the HB2 represents a Shore hardness measured in an environment at -10°C using a durometer type A after a plurality of the dip-molded articles was heated at 70°C for 30 minutes, stored at -10°C for 168 hours, and stacked to a thickness of $6.00 \pm 0.20$ mm.

**10.** A dip-molded article of a composition for forming a dip-molded body, the composition containing a chloroprene-based polymer latex, wherein:

a low-temperature hardness change $\Delta H2$ of the dip-molded article is 30 or less;
the low-temperature hardness change $\Delta H2$ is expressed as HB2-HA2;
the HA2 represents a Shore hardness measured in an environment at 23°C using a durometer type A after a plurality of the dip-molded articles was heated at 70°C for 30 minutes and stacked to a thickness of $6.00 \pm 0.20$ mm;
the HB2 represents a Shore hardness measured in an environment at -10°C using a durometer type A after a plurality of the dip-molded articles was heated at 70°C for 30 minutes, further stored at -10°C for 168 hours, and stacked to a thickness of $6.00 \pm 0.20$ mm; and
the dip-molded article has a tensile strength at break measured in accordance with JIS K 6251 of 18.0 MPa or higher, and a modulus at 100% elongation of 0.65 MPa or lower.

**INTERNATIONAL SEARCH REPORT**

International application No. **PCT/JP2023/003355**

**A. CLASSIFICATION OF SUBJECT MATTER**

***C08L 11/00***(2006.01)i; ***C08F 2/44***(2006.01)i; ***C08F 279/02***(2006.01)i
FI: C08L11/00; C08F2/44 C; C08F279/02

According to International Patent Classification (IPC) or to both national classification and IPC

**B. FIELDS SEARCHED**

Minimum documentation searched (classification system followed by classification symbols)

C08L11/00; C08F2/44; C08F279/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2006-096980 A (POLIMERI EUROPA SPA) 13 April 2006 (2006-04-13) claims, paragraphs [0012], [0017], [0033], examples 1-3 | 1-10 |
| A | JP 2005-220190 A (DENKI KAGAKU KOGYO KK) 18 August 2005 (2005-08-18) | 1-10 |
| P, A | WO 2022/202556 A1 (DENKA CO., LTD.) 29 September 2022 (2022-09-29) | 1-10 |
| P, A | WO 2022/130737 A1 (DENKA CO., LTD.) 23 June 2022 (2022-06-23) | 1-10 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/003355**

| Patent document cited in search report | Publication date (day/month/year) | Patent family member(s) | Publication date (day/month/year) |
|---|---|---|---|
| JP 2006-096980 A | 13 April 2006 | EP 1607420 A1<br>claims, paragraphs [0012], [0017], [0033], examples<br>US 2005/0282949 A1 | |
| JP 2005-220190 A | 18 August 2005 | (Family: none) | |
| WO 2022/202556 A1 | 29 September 2022 | (Family: none) | |
| WO 2022/130737 A1 | 23 June 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014114342 A
- WO 2019009038 A
- JP 2019143002 A
- WO 2021132460 A
- JP 2017508840 A
- JP 2020189963 A